# EUROPEAN PATENT APPLICATION

(11) **EP 2 642 818 A1**
(43) Date of publication of application: **25.09.2013**
(21) Application number: 13158099.5
(22) Date of filing: 07.03.2013
(51) Int. Cl.: H04W 92/20, H04W 84/00

(54) **Radio communication system, base station, relay station and communication method**

(30) Priority: 19.03.2012 JP 2012062887
(71) Applicant: FUJITSU LIMITED, Kawasaki-shi, Kanagawa 211-8588 (JP)
(72) Inventor: Murasawa, Shunichi, Kawasaki-shi, Kanagawa 211-8588 (JP)
(74) Representative: Schultes, Stephan

(57) **Abstract**

A radio communication system includes a first base station that includes a control part that sets an interface between the first base station and a second base station, the second base station having information to be used for adjusting between a protocol that is set between a host station and the first base station and a protocol that is set between the first base station and a relay station, and a communication module that carries out communication between the first base station and the host station through the interface that is set by the control part; and the relay station that carries out radio communication with the first base station and includes a control part that sets a protocol between the relay station and the second base station through an interface that is set between the relay station and the second base station.

## Description

### FIELD

The embodiments discussed herein are related to a radio communication system.

### BACKGROUND

In the 3rd Generation Partnership Project (3GPP), a study of Long Term Evolution-Advanced (LTE-Advanced) has been proceeded with which realizes higher speed and larger volume communication than LTE that is an evolved standard of the 3rd generation radio communication system.

According to LTE-Advanced, in addition to high speed and large volume communication by improving the efficiency of using frequencies, an improvement of throughput for a cell end user and an easy increase of a coverage area are aimed at. As one method of realizing this object, a study has been carried out for a relay configuration of defining two types, i.e., a donor base station (DeNB: Donor eNB) and a relay node (RN) in addition to a radio base station (eNB: eNodeB).

As one advantage of using the relay configuration, being able to achieve area expansion at low cost may be cited. This is because, by being able to eliminate a backhaul link that connects apparatuses included in a radio communication system such as switching stations, base stations and so forth, it is possible to reduce the physical network cost. By using a relay node, it is possible to remarkably reduce the limitations on an installation position and so forth in comparison to a case of using a repeater or the like. Employing the relay configuration is advantageous in particular for a disaster-stricken area or the like.

In a case of not using the relay configuration, there is a likelihood that plural user terminals (User Equipment (UE)) carry out handover processes almost simultaneously. For example, in a case where a movable body having plural users therein moves to another cell or the like, handover processes of the plural user terminals are carried out almost simultaneously. It is noted that the "movable body" may be an electric train, a bus or the like. In a case where handover processes of plural user terminals are carried out almost simultaneously, there is a likelihood that the success rate of the handover processes may be degraded due to a lack of the resources of the radio section or the like.

A case of using the relay configuration will now be described. A relay node functions as a user terminal for a donor base station, and thus, can carry out a handover process.

For example, by mounting a relay node in a movable body, a handover process can be carried out between a donor base station and the relay node in a case where the movable body moves to another cell. As a result of the handover process being thus carried out between the donor base station and the relay node, it is possible to deal with the movement of the movable body to the other cell by the handover process of a single radio circuit. Thus, improvement in the success rate of handover processes can be expected. Further, by using the relay configuration, the respective user terminals do not carry out handover processes. Thus, it is possible to reduce the power consumption in comparison to a case of not using the relay configuration.

As described above, by using the relay configuration, it is possible to share the resources of the radio section between the donor base station and the relay node. However, the Evolved Packet Core (EPC) carries out processes for the user terminals that are under control of the relay node at a time of the handover process. Thus, the processing load of the EPC may be increased.

Further, when the plural users ride on or exit the movable body, a tracking area update (TAU) procedure may be carried out using a NAS protocol by the user terminals of the plural users almost simultaneously. Since the TAU procedure will be thus carried out by the plural user terminals almost simultaneously, the processing load of the EPC may be increased.

An object of a radio communication system discussed herein is to reduce an EPC processing load at a time of a handover process of a relay node and achieve the most suitable load sharing in the entirety of the radio communication system.

### PRIOR ART REFERENCE

### NON-PATENT REFERENCE

NON-PATENT REFERENCE NO. 1: 3GPP TS36. 300 V10.4.0, "4.7 Support for relaying", 2011-06
NON-PATENT REFERENCE NO. 2: 3GPP TS29.281 V10.2.0, "4.2 GTP-U Tunnels", "7.2.1 Echo Request", "7.2.1 Echo Response", 2011-06
NON-PATENT REFERENCE NO. 3: 3GPP TS36.423 V10.2.0, "9.1.1.1 HANDOVER REQUEST", 2011-06
NON-PATENT REFERENCE NO. 4: RFC4960, "1.5.5. Chunk Bundling", "6.10. Bundling", September 2007
NON-PATENT REFERENCE NO. 5: 3GPP TS36.413 V10.2.0, "9.1.5.8 PATH SWITCH REQUEST", "9.1.5.9 PATH SWITCH REQUEST ACKNOWLEDGE", 2011-06

### SUMMARY

A radio communication system discussed herein has a first base station and a relay station that carries out radio communication with the first base station. The first base station includes a control part that sets an interface between the first base station and a second base station. The second base station has information to be used for adjusting between a protocol that is set between a host station and the first base station and a protocol that is set between the first base station and a relay station. The first base station further includes a communication module that carries out communication between the first base station and the host station through the interface that is set by the control part. The relay station includes a control part that sets a protocol between the relay station and the second base station through an interface that is set between the relay station and the second base station.

### BRIEF DESCRIPTION OF DRAWINGS

FIG. 1 depicts one embodiment of a radio communication system;
FIGs. 2A and 2B depict one example of protocol stacks;
FIG. 3 depicts one embodiment of the radio communication system;
FIG. 4 depicts a setting example of a GTP-U tunnel;
FIG. 5 depicts one embodiment of a donor base station;
FIGs. 6A and 6B depict one embodiment of S1proxy information;
FIG. 7 is a functional block diagram depicting one embodiment of the donor base station;
FIG. 8 depicts one embodiment of a relay node;
FIG. 9 is a functional block diagram depicting one embodiment of a relay node;
FIG. 10 is a flowchart depicting one embodiment of operations of the radio communication system;
FIG. 11 is a flowchart depicting one embodiment of delay amount measurement;
FIG. 12 is a sequence chart depicting one embodiment of the radio communication system;
FIG. 13 is a flowchart depicting one embodiment of a bundling process;
FIG. 14 is a sequence chart depicting one embodiment of the radio communication system;
FIG. 15 depicts one embodiment of a handover request;
FIG. 16 depicts one embodiment of a routing request;
FIG. 17 depicts one embodiment of a routing response;
FIG. 18 depicts one embodiment of a process of setting handover;
FIG. 19 is a sequence chart depicting one embodiment of the radio communication system;
FIG. 20 depicts one embodiment of a group path switch request;
FIG. 21 depicts one embodiment of a group path switch response; and
FIG. 22 is a sequence chart depicting one embodiment of the radio communication system.

### DESCRIPTION OF EMBODIMENTS

Below, the embodiments will be described using figures.

It is noted that in all the figures that will be used to explain the embodiments, the same reference numerals are given to the elements having the same functions, and duplicate descriptions will be omitted.

### <Radio Communication System>

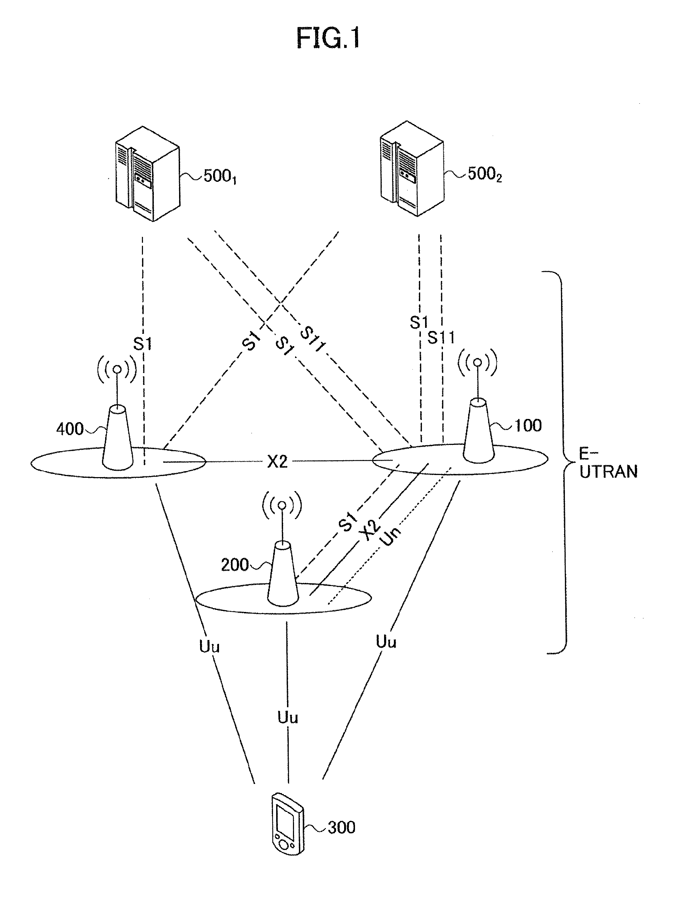

FIG. 1 depicts one embodiment of a radio communication system.

The radio communication system includes a base station 400 that carries out radio communication according to LTE. The base station 400 may also be referred to as a E-UTRAN Node-B. The base station 400 covers one or more cells. Although FIG. 1 depicts the single base station 400, a plurality of the base stations 400 may be included in the radio communication system. The base station 400 and an MME/S-GW 500ₙ are connected through an interface. The interface is an interface between a base station and a MME/S-GW and may be referred to as S1.

The radio communication system further includes a donor base station 100. Although FIG. 1 depicts the single donor base station 100, a plurality of the donor base stations 100 may be included in the radio communication system. The donor base station is obtained from adding a function of carrying out radio communication with a relay node 200 to the base station 400. The donor base station 100 covers one or more cells. The donor base station 100 and the base station 400 are connected through an interface. The interface is an interface between a donor base station and a base station and may be referred to as X2. The donor base station 100 and the MME/S-GW 500ₙ are connected through an interface. The interface is an interface between a donor base station and a MME/S-GW and may be referred to as S1. Further, the donor base station 100 and the MME/S-GW 500ₙ are connected through an interface. The interface is an interface between a donor base station and a MME/S-GW and may be referred to as S11.

The radio communication system further includes a user terminal 300 that carries out radio communication according to LTE. Although FIG. 1 depicts the single user terminal 300, a plurality of the user terminals 300 may be included in the radio communication system. The user terminal 300 carries out radio transmission according to Single Carrier-Frequency Division Multiple Access (SC-FDMA) for uplink. The user terminal 300 receives a transmitted radio signal according to Orthogonal Frequency Division Multiple Access (OFDMA) for downlink. The donor base station 100 and the user terminal 300 are connected through an interface, the base station 400 and the user terminal 300 are connected through an interface, and these interfaces may be referred to as Uu.

The radio communication system further includes the relay node 200. The relay node 200 is a node that relays communication between the donor base station 100 and the user terminal 300 at the layer 3 level. Although FIG. 1 depicts the single relay node 200, a plurality of the relay nodes 200 may be included in the radio communication system. The relay node 200 carries out a process of demodulation and a process of decoding of a downlink radio signal from the donor base station 100. Further, the relay node 200 reproduces and/or keeps confidentiality of the user data, carries out a process of separation, combination and/or the like of the user data, and carries out radio transmission of the user data to the user terminal 300 after coding and modulating the user data. The relay node 200 not only transmits a signal that is received from the donor base station 100 through the interface Uu to the terminal 300 but also transmits an uplink signal from the terminal 300 to the donor base station 100 through the interface Uu.

The relay node 200 covers a cell. The donor base station 100 and the relay node 200 are connected through interfaces. The interfaces may be referred to as S1, X2 and Un. The relay node 200 and the user terminal 300 are connected through an interface. The interface may be referred to as Uu.

The radio communication system includes the Mobility Management Entity/Serving Gateways (MME/S-GW) 500ₙ (n denotes an integer greater than 0 (n > 0)). FIG. 1 depicts a case where n = 2. The MME/S-GW 500ₙ may be realized by switching equipment. The switching equipment may include a node that manages C-Plane and a node that manages U-Plane. The node that manages C-Plane may be referred to as a Mobility Management Entity (MME). The node that manages C-Plane manages and stores a UE context. The UE context includes a user identifier, a mobility state, a security state and/or the like. The node that manages U-plane may be referred to as a Serving Gateway (S-GW). The node that manages U-Plane manages and stores a UE context. The UE context includes an IP bearer service parameter, routing information and/or the like. The MME/S-GW 500ₙ is connected with the donor base station 100 and the base station 400 through an IP network.

In the embodiment of the radio communication system, the radio interface referred to as Un is added between the donor base station 100 and the relay node 200. Through the radio interface Un, a signal that is transmitted between the MME/S-GW 500ₙ and the donor base station 100 through the interface S1 is transmitted to the user terminal 300 that is under control of the relay node 200.

In the relay configuration, it is preferable to reduce the impact to the EPC and the user terminal to a minimum. In order to reduce the impact to the EPC and the user terminal to a minimum, the relay node 200 and the user terminal 300 that is under control of the relay node 200 are recognized by the MME as a user terminal that is under control of the donor base station 100. Further, the relay node 200 is recognized by the user terminal 300 as a base station. During communication with the MME, a fact of connecting with the EPC through the donor base station 100 is prevented from being recognized by the user terminal 300.

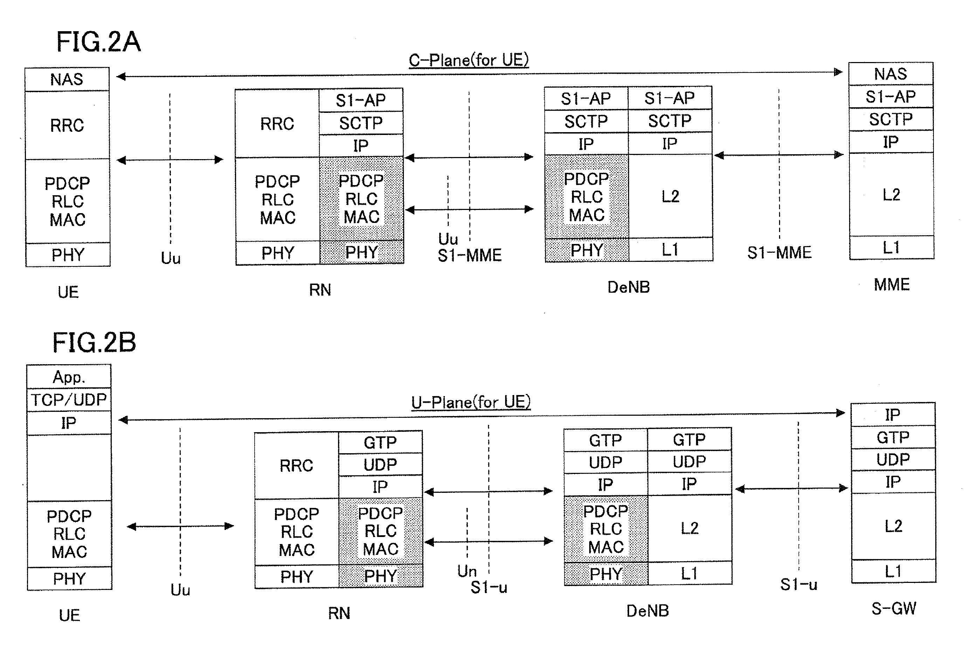

FIGs. 2A and 2B depict protocol stacks in the embodiment of the radio communication system. Details of the protocol stacks are described in NON-PATENT REFERENCE No. 1.

The base station 400 provides E-UTRA U-Plane and C-Plane. When providing U-plane, the base station 400 carries out processes concerning Packet Data Convergence Protocol (PDCP), Radio Link Control (RLC), Medium Access Control (MAC) and PHY. When providing C-plane, the base station 400 carries out a process concerning RRC. The base station 400 carries out processes as corresponding to a Node-B and a RNC of a Universal Terrestrial Radio Access Network (UTRAN).

An S1 Application Protocol (S1AP) is set in C-Plane and a GPRS Tunneling Protocol User plane (GTP-U) (referred to as "GTP") is set in U-Plane between the MME/S-GW 500ₙ and the donor base station 100 and between the donor base station 100 and the relay node 200. Further, a S1proxy function that is mounted in the donor base station 100 adjusts and coordinates between the ME/S-GW 500ₙ and the relay node 200. A radio bearer is mapped between the relay node 200 and the donor base station 100 as the interface Un. The radio bearer is a radio bearer for a case where the relay node 200 is regarded as a user terminal.

Further, in a case where the relay node 200 is regarded as a user terminal, the function of S-GW/P-GW (PDN-GW) will be mounted in the donor base station 100 in a pseudo manner. For this purpose, a function of terminating an interface S11 (GTP-C) between the donor base station 100 and the MME will be provided.

The protocol stacks of C-Plane are depicted in FIG. 2A.

The S1AP is mounted in the relay node 200. In the S1AP, functions to be used between the donor base station 100 and the MME are prescribed. The S1AP is terminated between the donor base station 100 and the MME. The S1AP has functions of establishing, changing and releasing a communication link for transmitting user data for a user terminal, a handover control function, a function of arriving at a user terminal that has been waiting and so forth.

The S1AP is transmitted between the relay node 200 and the MME using a Stream Control Transmission Protocol (SCTP) and an IP. The S1AP is once terminated at the donor base station 100 to which the relay node 200 is connected. As a result of the S1AP being thus terminated at the donor base station 100, the MME will establish a communication link with the donor base station 100 for transmitting the S1AP without regard to the number of relay nodes.

The protocol stacks of U-Plane are depicted in FIG. 2B.

The GTP-U is mounted in the relay node 200. The GTP-U transfers user data from the S-GW to the relay node 200.

### <Donor Base Station 100>

The relay node 200 will carry out handover from a donor base station that is a handover source (hereinafter, referred to as a "serving donor base station") to a donor base station that is a handover destination (hereinafter, referred to as a "target donor base station"). When the relay node 200 will thus carry out handover from the serving donor base station to the target donor base station, the serving donor base station stores S1proxy information concerning the S1proxy function. The serving donor base station that stores the S1proxy information will be referred to as an "anchor donor base station".

As a result of the serving donor base station thus storing the S1proxy information at a time of the relay node 200 carrying out handover, it is possible that the relay node carries out handover without giving impact to the side of the user terminal 300 and the EPC. That is, it is possible to reduce the process of the side of the user terminal 300 and the EPC as a result of the serving donor base station thus storing the S1proxy information in comparison to moving the S1proxy information from the serving donor base station to the target donor base station.

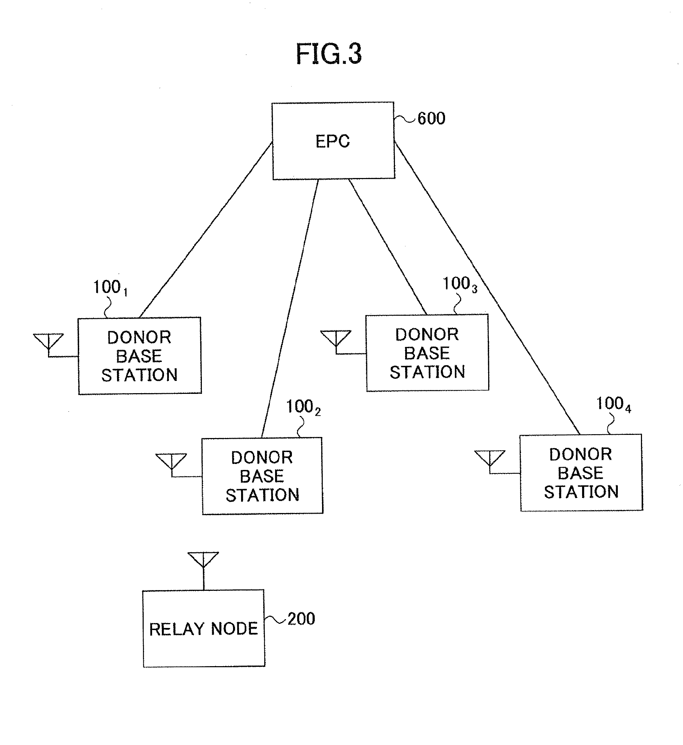

FIG. 3 depicts one embodiment of a radio communication system.

In the example depicted in FIG. 3, the radio communication system has plural donor base stations 100ₘ (m denotes an integer greater than 0 (m > 0). FIG. 3 depicts a case of, as one example, m = 4.

The relay node 200 will carry out handover from the donor base station 100₁ to the donor base station 100₂. As a result of relay node 200 thus carrying out handover to the donor base station 100₂, the relay node 200 will carry out radio communication with the donor base station 100₂.
When radio communication is thus carried out between the relay node 200 and the donor base station 100₂, the donor base station 100₂ carries out communication with the EPC 600 through the donor base station 100₁. As a result of the S1proxy information being stored by the donor base station 100₁, this communication mode is made possible. Between the donor base station 100₂ and the donor base station 100₁, a path (GTP-U tunnel) is established for allowing the corresponding signal to pass therebetween.

The relay node 200 will carry out handover from the donor base station 100₂ to the donor base station 100₃. As a result of relay node 200 thus carrying out handover to the donor base station 100₃, the relay node 200 will carry out radio communication with the donor base station 100₃. When radio communication is thus carried out between the relay node 200 and the donor base station 100₃, the donor base station 100₃ carries out communication with the EPC 600 through the donor base station 100₁. As a result of the S1proxy information being stored by the donor base station 100₁, this communication mode is made possible. Between the donor base station 100₃ and the donor base station 100₁, a path (GTP-U tunnel) is established for allowing the corresponding signal to pass therebetween.

A case of handover of the relay node 200 from the donor base station 100₃ to the donor base station 100₄ will now be considered. In a case where, also the same as the above, the donor base station 100₁ stores the S1proxy information, there will be a likelihood that the processing delay is increased because the distance between the donor base station 100₁ and the donor base station 100₄ may be large. In particular, there will be a likelihood that the processing delay of U-Plane may become problematic.

The donor base station 100₄ determines whether a transmission delay between the donor base station 100₄ and the donor base station 100₁ becomes greater than or equal to a predetermined threshold. In a case where an X2AP connection has been established between the donor base station 100₄ and the donor base station 100₁, one measured as the traffic information may be used as the transmission delay. In a case where an X2AP connection has not been established between the donor base station 100₄ and the donor base station 100₁, it is possible to determine that the transmission delay is greater than or equal to the predetermined threshold.

In a case of having determined that the transmission delay between the donor base station 100₄ and the donor base station 100₁ will be greater than or equal to the predetermined threshold, the donor base station 100₄ carries out a process of moving the S1proxy information from the donor base station 100₁ to the donor base station 100₄. Thus, when radio communication will be carried out between the relay node 200 and the donor base station 100₄, the donor base station 100₄ obtains the S1proxy information from the donor base station 100₁. When the donor base station 100₄ will obtain the S1proxy information from the donor base station 100₁, the donor base station 100₄ may obtain the S1proxy information through the interface X2. Further, when the donor base station 100₄ will obtain the S1proxy information from the donor base station 100₁, it is also possible that the donor base station 100₄ obtains the S1proxy information through the interface S1.

Further, in a case of having determined that the transmission delay between the donor base station 100₄ and the donor base station 100₁ will be less than the predetermined threshold, the donor base station 100₄ does not carry out the process of moving the S1proxy information from the donor base station 100₁ to the donor base station 100₄. Thus, when radio communication will be carried out between the relay node 200 and the donor base station 100₄, the donor base station 100₄ carries out communication with the EPC 600 through the donor base station 100₁.

Further, in a case where the process of moving the S1proxy information is thus not carried out and the S1proxy information is stored in the anchor donor base station when the relay node 200 will carry out handover, a GTP-U tunnel may be set between the target donor base station and the anchor donor base station. Details of the GT-U tunnel are described in NON-PATENT REFERENCE NO. 2.

The GTP-U tunnel thus set between the target donor base station and the anchor donor base station will be for the exclusive use of transferring C-Plane and U-Plane between the user terminal 300 and the MME. As a result of the GTP-U tunnel being thus set, the target donor base station can transmit data that is received by a radio frame of the interface Uu to the anchor donor base station through the GTP-U tunnel without regard to the type of the user terminal that is the transmission source. The anchor donor base station transmits the received payload data of GTP-U to the EPC 600 after carrying out an information conversion process based on the S1proxy information.

Further, the anchor donor base station transmits a signal to be transmitted to the relay node 200 to the target donor base station through the GTP-U tunnel. The target donor base station can transmit the data thus received from the GTP-U tunnel using a radio frame of the interface Uu by the same method as that used before the handover.

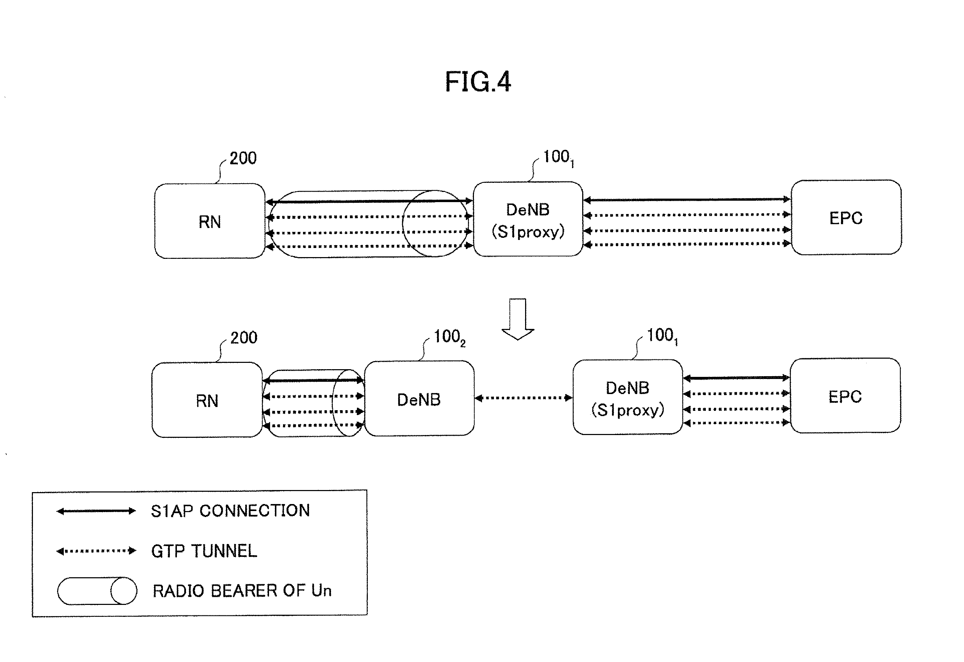

FIG. 4 depicts an example of setting the GTP-U tunnel.

The upper side of FIG. 4 depicts a state of a normal relay configuration before the GTP tunnel is set. That is, the state before the relay node 200 carries out handover is depicted. In the state before the relay node 200 carries out handover, S1AP connection and a GTP tunnel are set between the relay node 200 and the serving donor base station 100₁. Further, a radio bearer of an interface Un is set between the relay node 200 and the serving donor base station 100₁. Further, in the state before the relay node 200 carries out handover, a S1AP connection and a GTP tunnel are set between the serving donor base station 100₁ and the EPC.

The lower side of FIG. 4 depicts a state of the GTP-U tunnel being set when the relay node carries out handover without moving the S1proxy information. That is, the state is depicted of handover of the relay node 200 having been carried out from the serving donor base station 100₁ to the target donor base station 100₂ without moving the S1proxy information. In this state, a GTP tunnel is set between the serving donor base station 100₁ and the target donor base station 100₂. Further, in this state, a S1AP connection and a GTP tunnel are set between the relay node 200 and the target donor base station 100₂. Further, a radio bearer of an interface Un is set between the relay node 200 and the target donor base station 100₂. Further, the S1AP connection and the GTP tunnel that have been set between the serving donor base station 100₁ and the EPC 600 are maintained.

Between the serving donor base station 100₁ and the target donor base station 100₂, information that is transmitted by communication between the relay node 200 and the target donor base station 100₂ and information that is transmitted by communication between the serving donor base station 100₁ and the EPC 600 are set in GTP payload parts of the GTP tunnel.

### <Donor Base Station 100>

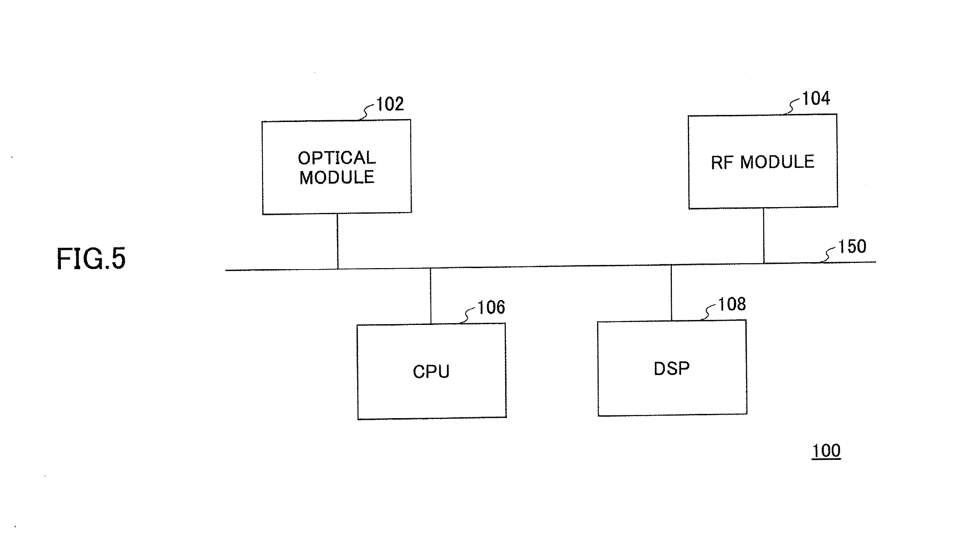

FIG. 5 depicts one embodiment of the donor base station 100.

FIG. 5 mainly depicts a hardware configuration.

The donor base station 100 includes an optical module 102, a RF module 104, a CPU 106 and a DSP 108. The optical module 102, RF module 104, CPU 106 and DSP 108 are mutually connected by a bus 150.

The optical module 102 converts an electric signal into an optical signal and outputs the optical signal to the MME/S-GW 500ₙ according to control of the CPU 106. Further, the optical module 102 converts an optical signal that is input from the MME/S-GW 500ₙ into an electric signal and inputs the electric signal to the CPU 106 according to control of the CPU 106. The optical module 102 connects this donor base station 100 and the MME/S-GW 500ₙ.

The RF module 104 converts a baseband signal from the DSP 108 into a radio signal and transmits the radio signal to the relay node 200 or the user terminal 100 according to control of the CPU 106. Further, the RF module 104 converts a radio signal from the relay mode 200 or the user terminal 300 and converts the radio signal into a baseband signal and inputs the baseband signal to the CPU 106 according to control of the CPU 106. The RF module 104 connects this donor base station 100 and the relay node 200 or the user terminal 300.

The CPU 106 stores the S1proxy information. The CPU 106 manages the S1proxy information separately for the respective user terminals that are under control of the relay node(s) that is under control of this donor base station 100. Further, the CPU 106 converts node identification information and UE identification information based on the S1proxy information.

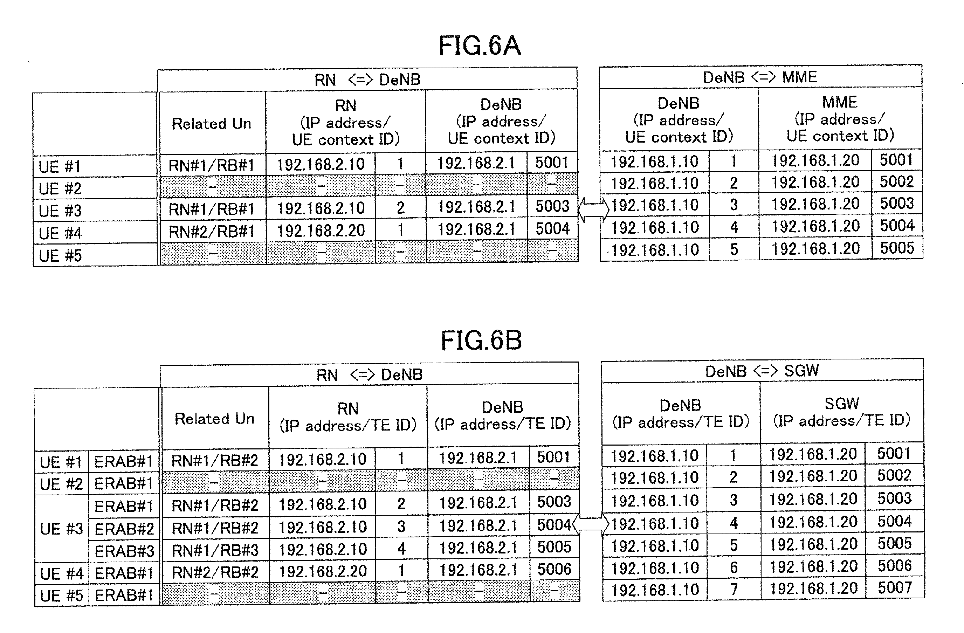

FIGs. 6A and 6B depict one embodiment of the S1proxy information.

The S1proxy information of the embodiment includes a S1-AP message conversion table and a GTP message conversion table. That is, the S1proxy information is used to adjust between a protocol(s) that is(are) set between the EPC and the donor base station and a protocol(s) that is(are) set between the donor base station and the relay node.

FIG. 6A depicts one embodiment of the S1-AP message conversion table. The S1-AP message conversion table includes a table (hereinafter referred to as a "first S1-AP message conversion table") in which a list of node information (IP addresses) and UE information (UE context IDs) is described to be used for communication of S1-MME between the relay node 200 and the donor base station 100. The donor base station 100 and the relay node 200 have the first S1-AP message conversion tables, respectively.

According to the first S1-AP message conversion table, the IP address of the RN#1 is 192.168.2.10. The IP address of the DeNB is 192.168.2.1.

The UE#1 is under control of the RN#1. The radio interface Un between the DeNB and the RN#1 to be used for allowing the S1-AP signal for the UE#1 to pass is RB#1. The UE context ID on the side of the RN#1 is 1. The UE context ID on the side of the DeNB is 5001.

The UE#2 is not under control of an RN. That is, the UE#2 is a UE that is directly managed by the DeNB without using an RN. Thus, the field concerning the UE#2 in the first S1-AP message conversion table is blank.

Further, the S1-AP message conversion table includes a table (hereinafter referred to as a "second S1-AP message conversion table") in which a list of node information (IP addresses) and UE information (UE context IDs) is described to be used for communication of S1-MME between the donor base station 100 and the MME. The donor base station 100 and the MME have the second S1-AP message conversion tables, respectively.

According to the second S1-AP message conversion table, the IP address of the DeNB is 192.168.1.10. The IP address of the MME is 192.168.1.20.

Further, concerning the UE#1, the UE context ID on the side of the DeNB is 1. The UE context ID on the side of the MME is 5001.

In a case where the CPU 106 has received the S1-AP message concerning the UE#1 received from the RN#1 (i.e., the CPU 106 has received a packet in which the source IP address in the IP header is 192.168.2.10, the target IP address in the IP header is 192.168.2.1, the UE context ID of counterpart node management in the S1-AP message is 1 and the UE context ID of own node management in the S1-AP message is 5001), the CPU 106 uses the S1proxy information, converts the various sorts of information (i.e., the CPU 106 converts the source IP address in the IP header into 192.168.1.10, converts the target address in the IP header into 192.168.1.20, converts the UE context ID of counterpart node management in the S1-AP message into 1 and converts the UE context ID of own node management in the S1-AP message into 5001), and transmits the converted information to the side of the MME. Also in a case of having received the S1-AP message concerning the UE#1 from the MME, the CPU 106 converts the information in the same or a similar method and transmits the converted information to the RN#1 (RB#1 of the interface Uu).

FIG. 6B depicts one embodiment of the GTP message conversion table. The GTP message conversion table includes a table (hereinafter referred to as a "first GTP message conversion table") in which a list of node information (IP addresses) and UE information (TE IDs) is described to be used for communication of S1-u between the relay node 200 and the donor base station 100. The donor base station 100 and the relay node 200 have the first GTP message conversion tables, respectively.

According to the first GTP message conversion table, the IP address of the RN#1 is 192.168.2.10. The IP address of the DeNB is 192.168.2.1.

The radio interface Un between the DeNB and the RN#1 to be used for allowing the S1-u signal for the UE#1/RB#1 to pass is RB#2. The TEID on the side of the RN#1 is 1. The TEID on the side of the DeNB is 5001.

The UE#2 is not under control of an RN. That is, the UE#2 is a UE that is directly managed by the DeNB without using an RN. Thus, the field concerning the UE#2 in the first GTP message conversion table is blank.

Further, the GTP message conversion table includes a table (hereinafter referred to as a "second GTP message conversion table") in which a list of node information (IP addresses) and UE information (TE IDs) is described to be used for communication of S1-u between the donor base station 100 and the S-GW. The donor base station 100 and the S-GW have the second GTP message conversion tables, respectively.

According to the second GTP message conversion table, the IP address of the DeNB is 192.168.1.10. The IP address of the S-GW is 192.168.1.20.

Concerning the UE#1/RB#1, the TEID on the side of the DeNB is 1. The TEID on the side of the S-GW is 5001.

In a case where the CPU 106 has received the S1-u signal received from the RN#1 (i.e., the CPU 106 has received a packet in which the source IP address in the IP header is 192.168.2.10, the target IP address in the IP header is 192.168.2.1 and the TEID in the GTP header is 5001), the CPU 106 uses the S1proxy information, converts the various sorts of information (i.e., the CPU 106 converts the source IP address in the IP header into 192.168.1.10, converts the target address in the IP header into 192.168.1.20 and converts the TEID in the GTP header into 5001) and transmits the converted information to the side of the S-GW. Also in a case of having received the S1-u signal concerning the UE#1/RB#1 from the S-GW, the CPU 106 converts the information in the same or a similar method and transmits the converted information to the RN#1 (RB#2 of the interface Uu).

The CPU 106 carries out call processing control. That is, the CPU 106 terminates RRC between this donor base station 100 and the user terminal 300. The CPU 106 terminates S1AP between this donor base station 100 and the relay node 200. The CPU 106 terminates S1AP between this donor base station 100 and the MME. The CPU 106 terminates X2AP between this donor base station 100 and another donor base station. The CPU 106 terminates X2AP between this donor base station 100 and the relay node 200.

The CPU 106 carries out a transmission process. The CPU 106 terminates a GTP-U layer between this donor base station 100 and the relay node 200. The CPU 106 terminates a GTP-U layer between this donor base station 100 and the MME. The CPU 106 terminates SCTP between this donor base station 100 and the relay node 200. The CPU 106 terminates SCTP between this donor base station 100 and the MME. The CPU 106 terminates MAC between this donor base station 100 and the relay node 200. The CPU 106 terminates IP between this donor base station 100 and the relay node 200. The CPU 106 terminates IP between this donor base station 100 and the MME. The CPU 106 terminates UDP between this donor base station 100 and the relay node 200. The CPU 106 terminates UDP between this donor base station 100 and the MME.

The DSP 108 carries out a baseband process. The DSP 108 carries out control to terminate a L1 layer according to control of the CPU 106. The DSP 108 carries out control to terminate a MAC layer according to control of the CPU 106.

The DSP 108 carries out a baseband process. The DSP 108 terminates a MAC layer according to control of the CPU 106. The DSP 108 terminates a RLC layer according to control of the CPU 106. The DSP 108 terminates a PDCP layer according to control of the CPU 106.

The RF module 104 converts a baseband signal from the DSP 108 into a radio signal.

### <Function of Donor Base Station 100>

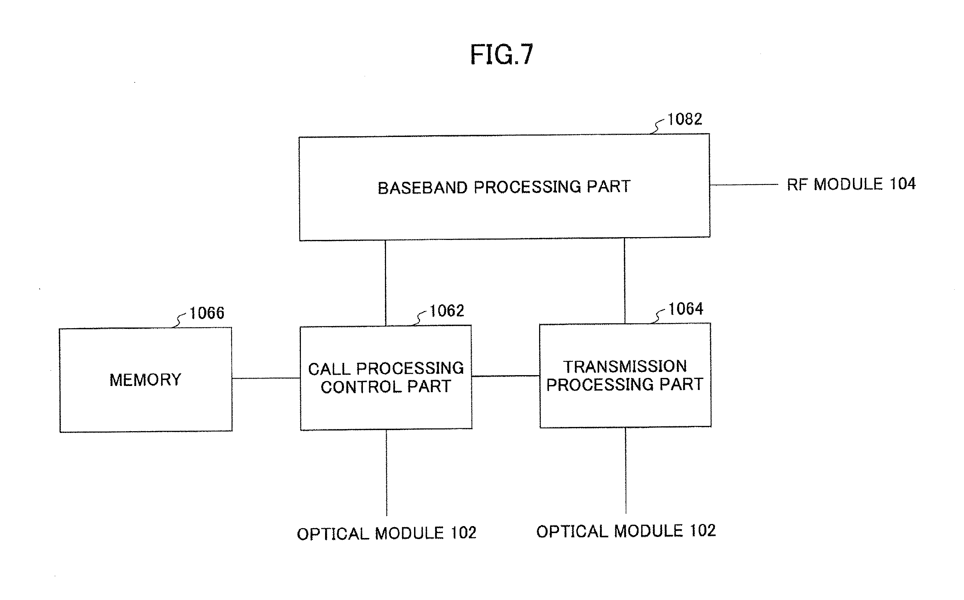

FIG. 7 is a functional block diagram depicting one embodiment of the donor base station 100.

The donor base station 100 includes a baseband processing part 1082, a call processing control part 1062, a transmission processing part 1064 and a memory 1066.

The function of the baseband processing part 1082 is executed by the DSP 108. The baseband processing part 1082 inputs data to and outputs data from the RF module 104. The baseband processing part 1082 inputs information to and outputs information from the CPU 106. The baseband processing part 1082 monitors traffic. Specifically, the baseband processing part 1082 monitors a state(s) of the cell(s). The baseband processing part 1082 carries out setting and canceling confidentiality. The baseband processing part 1082 carries out MAC multiplexing and demultiplexing. The baseband processing part 1082 carries out synchronous processing. The baseband processing part 1082 carries out paging processing.

The function of the call processing control part 1062 is executed by the CPU 106. The call processing control part 1062 is connected with the baseband processing part 1082. The call processing control part 1062 carries out call processing. The call processing control part 1062 carries out control for when transferring the S1proxy information. The call processing control part 1062 carries out control connection between this donor base station 100 and the user terminal 300. Further, the call processing control part 1062 manages connection between this donor base station 100 and the user terminal 300.

The function of the transmission processing part 1064 is executed by the CPU 106. The transmission processing part 1064 is connected with the baseband processing part 1082 and the call processing control part 1062. The transmission processing part 1064 carries out resource management. The transmission processing part 1064 analyzes the reception quality of downlink notified of by the user terminal 300. Specifically, the transmission processing part 1064 determines whether to cause the user terminal 300 to carry out handover.

The memory 1066 is mounted in the CPU 106. The memory 1066 is connected with the call processing control part 1062. In the memory 1066, the S1proxy information is stored.

### <Relay Node 200>

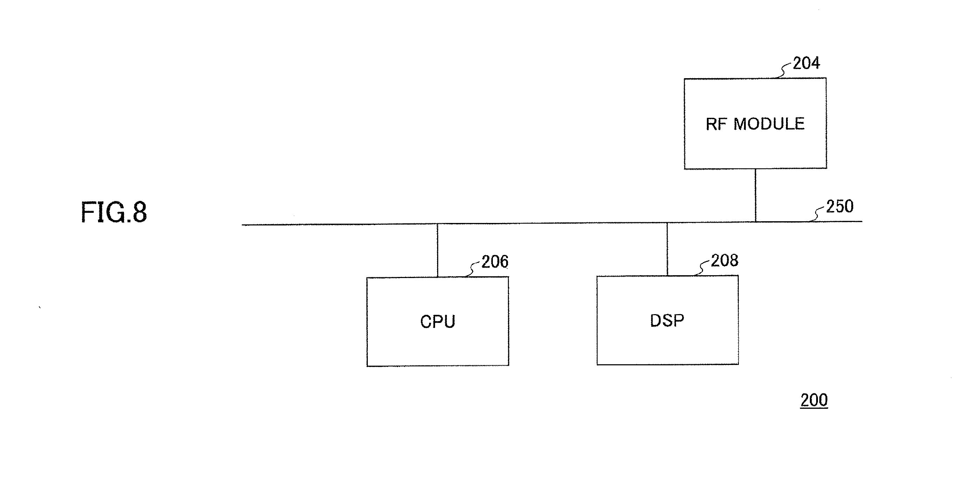

FIG. 8 depicts one embodiment of the relay node 200.

FIG. 8 mainly depicts a hardware configuration.

The relay node 200 includes a RF module 204, a CPU 206 and a DSP 208. The RF module 204, CPU 206 and DSP 208 are mutually connected by a bus 250.

The RF module 204 converts a baseband signal from the DSP 208 into a radio signal and transmits the radio signal to the user terminal 300 or the donor base station 100 according to control of the CPU 206. Further, the RF module 204 converts a radio signal from the user terminal 300 into a baseband signal and inputs the baseband signal to the CPU 206 according to control of the CPU 206. The RF module 204 connects this relay node 200 and the user terminal 300. Further, the RF module 204 converts a radio signal from the donor base station 100 into a baseband signal and inputs the baseband signal to the CPU 206 according to control of the CPU 206. The RF module 204 connects this relay node 200 and the donor base station 100.

The CPU 206 stores the S1proxy information. The CPU 206 manages the S1proxy information separately for the respective user terminals that are under control of this relay node 200. Further, the CPU 206 carries out NAT conversion based on the S1proxy information. The CPU 206 stores the first S1-AP message conversion table and the first GTP message conversion table depicted in FIGs. 6A and 6B.

The CPU 206 carries out call processing. That is, the CPU 206 terminates RRC between this relay node 200 and the user terminal 300. The CPU 206 terminates S1AP between this relay node 200 and the donor base station 100. The CPU 206 terminates X2AP between this relay node 200 and another donor base station. The CPU 206 terminates X2AP between this relay node 200 and the donor base station 100.

The CPU 206 carries out transmission processing. The CPU 206 terminates a GTP-U layer between this relay node 200 and the donor base station 100. The CPU 206 terminates SCTP between this relay node 200 and the donor base station 100. The CPU 206 terminates IP between this relay node 200 and the donor base station 100. The CPU 206 terminates UDP between this relay node 200 and the donor base station 100.

The DSP 208 carries out baseband processing. The DSP 208 carries out control to terminate a L1 layer according to control of the CPU 206. The DSP 208 carries out control to terminate a MAC layer according to control of the CPU 206.

The DSP 208 carries out baseband processing. The DSP 208 terminates a MAC layer according to control of the CPU 206. The DSP 208 terminates a RLC layer according to control of the CPU 206. The DSP 208 terminates a PDCP layer according to control of the CPU 206.

The RF module 104 converts a baseband signal from the DSP 208 into a radio signal.

### <Function of Relay Node 200>

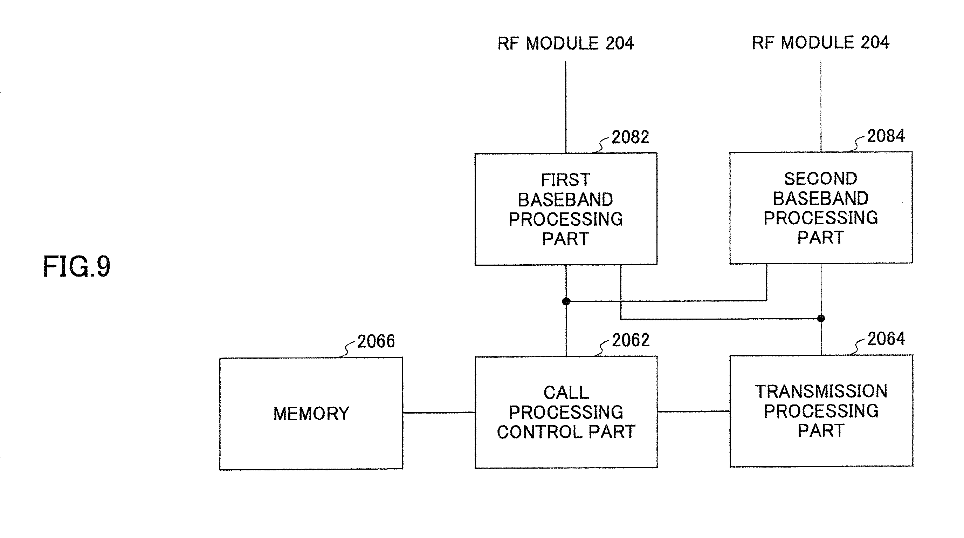

FIG. 9 is a functional block diagram depicting one embodiment of the relay node 200.

The relay node 200 includes a first baseband processing part 2082, a second baseband processing part 2084, a call processing control part 2062, a transmission processing part 2064 and a memory 2066.

The function of the first baseband processing part 2082 is executed by the DSP 208. The first baseband processing part 2082 inputs data to and outputs data from the RF module 204. The first baseband processing part 2082 inputs information to and outputs information from the CPU 206. The first baseband processing part 2082 has a function as a user terminal. The first baseband processing part 2082 monitors traffic and monitors a state(s) of the cell(s). The first baseband processing part 2082 carries out control for when searching for a cell. The first baseband processing part 2082 sets and cancels confidentiality. The first baseband processing part 2082 carries out MAC multiplexing and demultiplexing. The first baseband processing part 2082 carries out synchronous processing.

The function of the second baseband processing part 2084 is executed by the DSP 208. The second baseband processing part 2084 inputs data to and outputs data from the RF module 204. The second baseband processing part 2084 inputs information to and outputs information from the CPU 206. The second baseband processing part 2084 has a function as a base station. The second baseband processing part 2084 manages traffic. Specifically, the second baseband processing part 2084 manages GTP. Further, the second baseband processing part 2084 carries out traffic transfer. Specifically, the second baseband processing part 2084 carries out a process of transferring GTP. The second baseband processing part 2084 monitors traffic and monitors a state(s) of the cell(s). Further, the second baseband processing part 2084 sets and cancels confidentiality. The second baseband processing part 2084 carries out MAC multiplexing and demultiplexing. The second baseband processing part 2084 carries out synchronous processing. The second baseband processing part 2084 carries out paging processing.

The function of the call processing control part 2062 is executed by the CPU 206. The call processing control part 2062 is connected with the first baseband processing part 2082 and the second baseband processing part 2084. The call processing control part 2062 has a function as a user terminal and a function as a base station. The call processing control part 2062 carries out call processing between this relay node 200 and the donor base station 100 when executing the function as a user terminal. The call processing control part 2062 carries out call processing between this relay node 200 and the user terminal 300 when executing the function as a base station. The call processing control part 2062 manages connection between this relay node 200 and the donor base station 100 when executing the function as a user terminal. The call processing control part 2062 manages connection between this relay node 200 and the user terminal 300 when executing the function as a base station. Further, the call processing control part 2062 controls handover of the user terminal 300 that is connected with this relay node 200 when executing the function as a base station.

The function of the transmission processing part 2064 is executed by the CPU 206. The transmission processing part 2064 is connected with the first baseband processing part 2082, the second baseband processing part 2084 and the call processing control part 2062. The transmission processing part 2064 has a function as a user terminal and a function as a base station. The transmission processing part 2064 carries out resource management when executing the function as a user terminal. The transmission processing part 2064 carries out resource management when executing the function as a base station. The transmission processing part 2064 controls handover of the user terminal 300 that is connected with this relay node 200 when executing the function as a base station.

The memory 2066 is mounted in the CPU 206. The memory 2066 is connected with the call processing control part 2062. In the memory 2066, the S1proxy information is stored.

### <Operations of Radio Communication System>

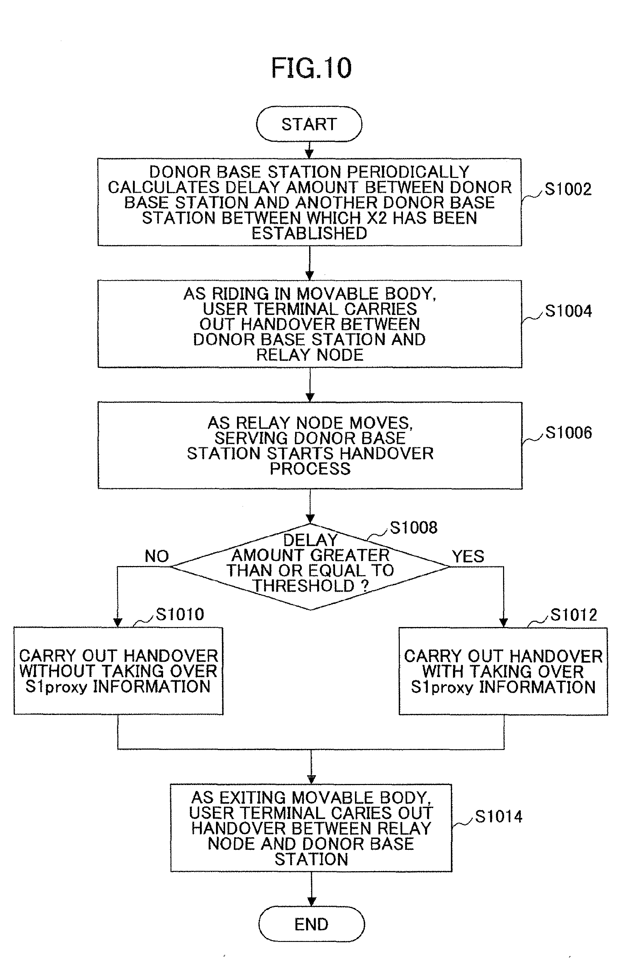

FIG. 10 depicts one embodiment of operations of the radio communication system.

In an example depicted in FIG. 10, a case will be described where a movable body in which the relay node 200 is mounted moves.

The donor base station 100 periodically measures a delay amount between this donor base station 100 and another donor base station between which the interface X2 has been established (step S1002). That is, the transmission processing part 1064 of the donor base station 100 periodically measures the delay amount. The delay amount is generated due to the physical distance between the donor base station 100 and another donor base station and network traffic, and varies due to a difference of a target donor base station that is a handover destination. Thus, according to the embodiment, any one of different handover procedures is selected based on the delay amount different depending on a target donor base station that is handover destination.

As a user rides in a movable body, the user terminal 300 carries out handover between the donor base station 100 and the relay node 200 (step S1004).

As the movable body moves, the relay node 200 moves. As the relay node 200 thus moves, the serving donor base station starts a handover process (step S1006).

The target donor base station determines whether the delay amount is greater than or equal to a threshold (step S1008).

In a case where it has been determined that the delay amount is less than the threshold (step S1008 NO), the target donor base station carries out a handover process without taking over the S1proxy information (step S1010).

In a case where it has been determined that the delay amount is greater than or equal to the threshold (step S1008 YES), the target donor base station carries out a handover process with taking over the S1proxy information (step S1012).

As the user exits the movable body, the user terminal 300 carries out handover between the relay node 200 and the donor base station 100 (step S1014).

In the flowchart depicted in FIG. 10, the process of steps S1006 through S1012 may be repeated a plural number of times as appropriate until the movable body reaches a destination.

### <Process of Calculating Delay Amount>

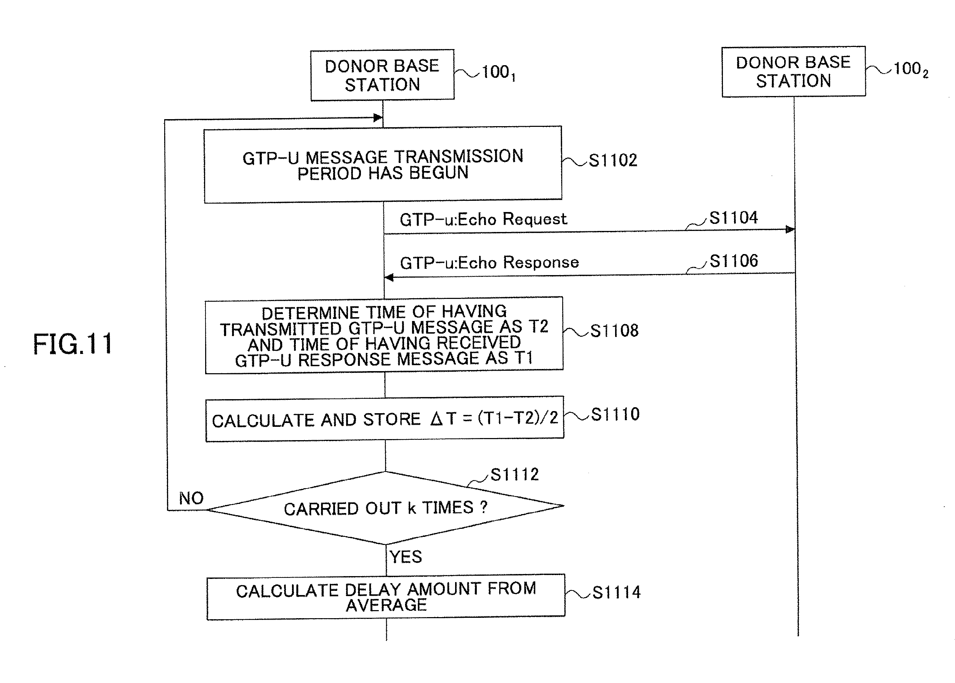

FIG. 11 depicts one embodiment of a process of calculating the delay amount. FIG. 11 depicts details of a process corresponding to step S1002 of FIG. 10.

In an example depicted in FIG. 11, the donor base station 100₁ calculates the delay amount between the donor base station 100₁ and the donor base station 100₂. Further, in the example depicted in FIG. 11, the delay amount is calculated using an Echo Request and an Echo Response based on a period of time from when the message has been transmitted until the message is received. The Echo Request and the Echo Response may be carried out periodically for the purpose of confirming a connection of GTP. The Echo Request and the Echo Response are described in NON-PATENT REFERENCE NO. 2.

FIG. 11 mainly depicts a process executed by the transmission processing part 1064 of the donor base station 100₁.

In the donor base station 100₁, a GTP-U message transmission period has begun (step S1102).

The donor base station 100₁ transmits an "Echo Request" using the GTP-U protocol (step S1104).

The donor base station 100₁ receives an "Echo Response" using the GTP-U protocol from the donor base station 100₂ (step S1106).

The donor base station 100₁ determines the time of having transmitted the GTP-U message (Echo Request) as "T2" and the time of having received the GTP-U response message (Echo Response) as "T1" (step S1108).

The donor base station 100₁ measures the delay amount ΔT (step S1110). Specifically, the donor base station 100₁ calculates ΔT = (T1-T2)/2, and thus calculates the delay amount ΔT. The donor base station 100₁ stores the delay amount ΔT.

The donor base station 100₁ determines whether to have calculated the delay amounts k times (step S1112).

In a case of not having determined to have calculated the delay amounts k times (step S1112 NO), the process is returned to step S1102.

In a case of having determined to have calculated the delay amounts k time (step S1112 YES), the donor base station 100₁ averages the delay amounts calculated k times and obtains the average thereof as the delay amount (step S1114).

### <Operations When Riding in Movable Body>

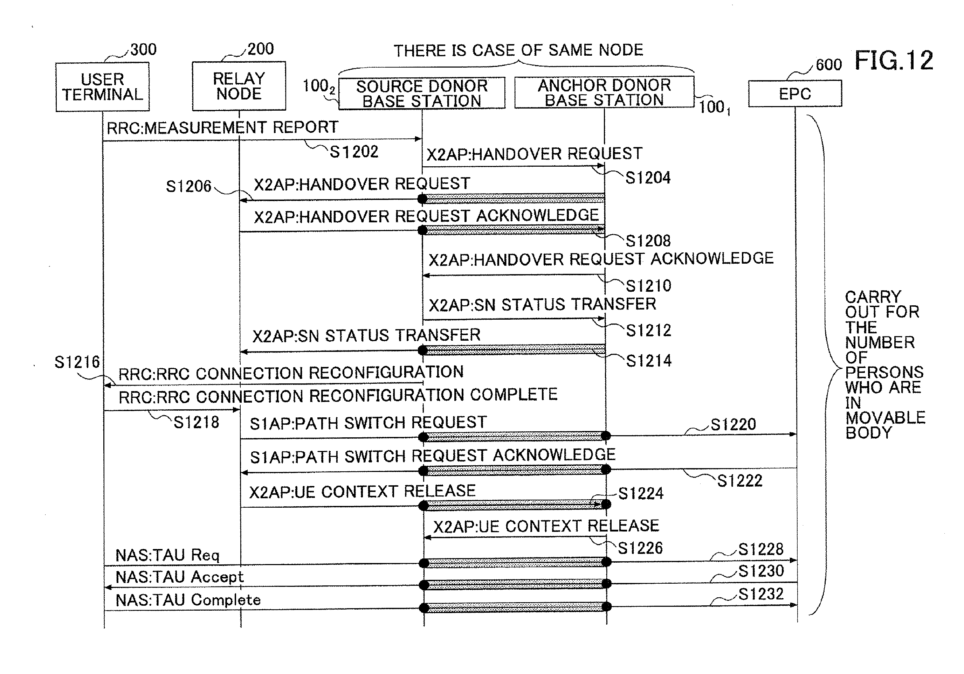

FIG. 12 depicts operations for when the user terminal 300 that is under control of the source donor base station 100₂ carries out handover to the relay node 200. FIG. 12 depicts details of a process corresponding to step S1004 of FIG. 10. FIG. 12 depicts a case where the anchor donor base station 100₁ has the S1proxy information of the user terminal 300. That is, communication between the relay node 200 and the anchor donor base station 100₁ is carried out through a GTP tunnel that is for the exclusive use and set between the source donor base station 100₂ and the anchor donor base station 100₁. The parts provided by the GTP tunnel for the exclusive use are expressed by thick lines in FIG. 12. There is a case where the source donor base station 100₂ and the anchor donor base station 100₁ are the same base station. In this case, communication between the source donor base station 100₂ and the anchor donor base station 100₁ will be omitted from the following description.

Whether a passenger is in a movable body in which the relay node 200 is mounted at a rail station or the like is determined by whether handover from the donor base station to the relay node has occurred first. It is also possible to determine whether a passenger is in a movable body in which the relay node 200 is mounted at a rail station or the like as a result of being notified of by the relay node. For example, the relay node 200 may carry out notification using the S1AP protocol. Further, It is also possible to determine whether a passenger is in a movable body in which the relay node 200 is mounted at a rail station or the like by the donor base station. For example, the donor base station may determine it using Operations, Administration, and Maintenance (OAM) information that includes operation information of the movable body and/or the moving speed thereof.

The user terminal 300 transmits a "measurement report (MEASUREMENT REPORT)" to the source donor base station 100₂ using the RRC protocol (step S1202).

The source donor base station 100₂ transmits a "handover request (HANDOVER REQUEST)" to the anchor donor base station 100₁ using the X2AP protocol (step S1204). The call processing control part 1062 of the source donor base station 100₂ transmits the handover request to the anchor donor base station 100₁ through the transmission processing part 1064 and the optical module 102. An adjacent node recognizes as if the cell(s) of the relay node 200 is(are) managed by the anchor donor base station 100₁. Thus, the source donor base station 100₂ transmits the handover request to the anchor donor base station 100₁.

The anchor donor base station 100₁ transmits a "handover request (HANDOVER REQUEST)" to the relay node 200 using the X2AP protocol (step S1206). The call processing control part 1062 of the anchor donor base station 100₁ transmits the handover request to the source donor base station 100₂ through the transmission processing part 1064 and the optical module 102. The handover request is then received by the transmission processing part 1064 of the source donor base station 100₂ through the optical module 102, and is transmitted to the relay node 200 from the baseband processing part 1082 through the RF module 104.

The relay node 200 transmits a "handover request acknowledge (HANDOVER REQUEST ACKNOWLEDGE)" to the anchor donor base station 100₁ using the X2AP protocol (step S1208). The call processing control part 2062 of the relay node 200 carries out a process of transmitting the handover request acknowledge through the transmission processing part 2064, the first baseband processing part 2082 and the RF module 204. The handover request acknowledge is then received by the baseband processing part 1082 of the source donor base station 100₂ through the RF module 104, and is transmitted to the anchor donor base station 100₁ from the transmission processing part 1064.

The anchor donor base station 100₁ transmits a "handover request acknowledge (HANDOVER REQUEST ACKNOWLEDGE)" to the source donor base station 100₂ using the X2AP protocol (step S1210). The call processing control part 1062 of the anchor donor base station 100₁ transmits the handover request acknowledge to the source donor base station 100₂ through the transmission processing part 1064 and the optical module 102.

The source donor base station 100₂ transmits a "SN status transfer (SN STATUS TRANSFER)" to the anchor donor base station 100₁ using the X2AP protocol (step S1212). The call processing control part 1062 of the source donor base station 100₂ transmits the SN status transfer to the anchor donor base station 100₁ through the transmission processing part 1064 and the optical module 102.

The anchor donor base station 100₁ transmits a "SN status transfer (SN STATUS TRANSFER)" to the relay node 200 using the X2AP protocol (step S1214). The call processing control part 1062 of the anchor donor base station 100₁ transmits the SN status transfer to the source donor base station 100₂ through the transmission processing part 1064 and the optical module 102. The SN status transfer is then received by the transmission processing part 1064 of the source donor base station 100₂ through the optical module 102, and is transmitted to the relay node 200 from the baseband processing part 1082 through the RF module 104.

The source donor base station 100₂ transmits a "RRC connection reconfiguration (RRC CONNECTION RECONFIGURATION)" to the user terminal 300 using the RRC protocol (step S1216). The call processing control part 1062 of the source donor base station 100₂ transmits the RRC connection reconfiguration to the user terminal 300 through the baseband processing part 1082 and the RF module 104.

The user terminal 300 transmits a "RRC connection reconfiguration complete (RRC CONNECTION RECONFIGURATION COMPLETE)" to the relay node 200 using the RRC protocol (step S1218).

The relay node 200 transmits a "path switch request (PATH SWITCH REQUEST)" to the EPC 600 using the S1AP protocol (step S1220). The call processing control part 2062 of the relay node 20 transmits the path switch request to the source donor base station 100₂ through the transmission processing part 2064, the first baseband processing part 2082 and the RF module 204. The path switch request is then transmitted to the EPC 600 through the source donor base station 100₂ and the anchor donor base station 100₁.

The EPC 600 transmits a "path switch request acknowledge (PATH SWITCH REQUEST ACKNOWLEDGE)" to the relay node 200 using the S1AP protocol (step S1222).

The relay node 200 transmits a "UE context release (UE CONTEXT RELEASE)" to the anchor donor base station 100₁ using the X2AP protocol (step S1224). The call processing control part 2062 of the relay node 200 transmits the UE context release to the source donor base station 100₂ through the transmission processing part 2064, the first baseband processing part 2082 and the RF module 204. The UE context release is then transmitted to the anchor donor base station 100₁ through the source donor base station 100₂.

The anchor donor base station 100₁ transmits a "UE context release (UE CONTEXT RELEASE)" to the source donor base station 100₂ using the X2AP protocol (step S1226). The call processing control part 1062 of the anchor donor base station 100₁ transmits the UE context release to the source donor base station 100₂ through the transmission processing part 1064 and the optical module 102.

The user terminal 300 transmits a "tracking area update request (TAU Req)" to the EPC 600 using the NAS protocol (step S1228). The tracking area update request transmitted from the user terminal 300 is transmitted to the EPC 600 through the source donor base station 100₂ and the anchor donor base station 100₁. The anchor donor base station 100₁ carries out a bundling process of the SCTP layer on uplink messages that are transmitted using the NAS protocol. That is, the anchor donor base station 100₁ makes the header information common concerning layers lower than and equal to the SCTP layer. By thus carrying out the process of bundling of the SCTP layer, it is possible to reduce the processing load of the EPC 600.

The EPC 600 transmits a "tracking area update accept (TAU Accept)" to the user terminal 300 using the NAS protocol (step S1230).

The user terminal transmits a "tracking area update complete (TAU Complete)" to the EPC 600 using the NAS protocol (step S1232).

### <Bundling Process of Uplink Messages>

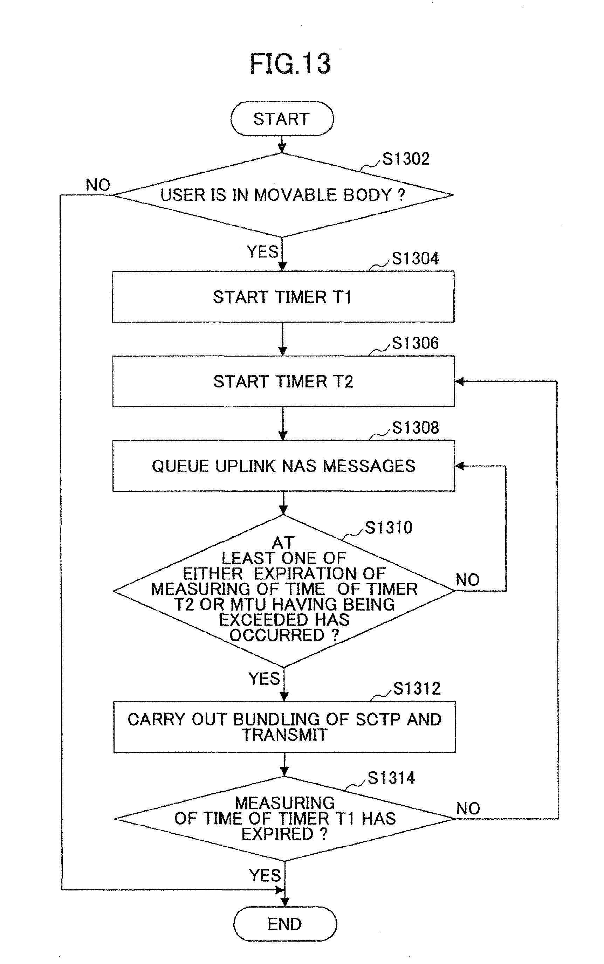

FIG. 13 depicts one embodiment of the process of bundling uplink NAS messages carried out by the anchor donor base station 100₁. FIG. 13 depicts a process corresponding to step S1228 of FIG. 12.

The anchor donor base station 100₁ determines whether the user is in the movable body (step S1302). That is, the call processing control part 1062 of the anchor donor base station 100₁ determines whether the user is in the movable body in which the relay node that is managed by the anchor donor base station 100₁ is mounted.

In a case of not having determined that the user is in the movable body (step S1302 NO), the process is finished. That is, bundling uplink NAS messages is not carried out.

In a case of having determined that the user is in the movable body (step S1302 YES), the anchor donor base station 100₁ starts a timer T1 (step S1304). That is, the call processing control part 1062 of the anchor donor base station 100₁ starts the timer T1, and also gives an instruction to the transmission processing part 1064 to start bundling uplink NAS messages. The timer T1 is previously set to have a time length on the order of a period of time for which the movable body is standing.

The anchor donor base station 100₁ starts a timer T2 (step S1306). That is, the transmission processing part 1064 of the anchor donor base station 100₁ starts the timer T2. The timer T2 is set to have a period of time on the order for which no problem will occur in the NAS communication.

The anchor donor base station 100₁ queues the uplink NAS messages while the timer T2 is measuring a time (step S1308). That is, the transmission processing part 1064 of the anchor donor base station 100₁ queues the uplink NAS messages. Specifically, the transmission processing part 1064 queues the tracking area update request, the tracking area update complete and so forth from the user terminal 300.

The anchor donor base station 100₁ determines whether at least one of either the expiration of measuring of time of the timer T2 or the Maximum Transmission Unit (MTU) being exceeded has occurred (step S1310). That is, the transmission processing part 1064 of the anchor donor base station 100₁ determines whether at least one of either the expiration of measuring a time of timer T2 or the MTU being exceeded has occurred.

In a case where neither the expiration of measuring a time of the timer T2 nor the MTU being exceeded has occurred (step S1310 NO), the process is returned to step S1308.

At least one of either the expiration of measuring a time of the timer T2 or the MTU being exceeded has occurred (step S1310 YES), the anchor donor base station 100₁ carries out bundling the queued uplink NAS messages and transmits them using the SCTP protocol (step S1312). That is, the transmission processing part 1064 of the anchor donor base station 100₁ carries out bundling the queued uplink NAS messages and transmits them using the SCTP protocol. It is noted that in a case where the MTU has been exceeded, the transmission processing part 1064 of the anchor donor base station 100₁ forcibly causes the measuring of time of the timer T2 to expire.

The anchor donor base station 100₁ determines whether the measuring of time of the timer T1 expires (step S1314). That is, the transmission processing part 1064 of the anchor donor base station 100₁ determines whether the expiration of measuring of time of the timer T1 has occurred.

In a case of having determined that the expiration of measuring of time of the timer T1 has occurred (step S1314 YES), the anchor donor base station 100₁ finishes the process.

In a case of not having determined that the expiration of measuring of time of the timer T1 has occurred (step S1314 NO), the anchor donor base station 100₁ returns to step S1306.

### <Handover Process without Transferring S1proxy Information>

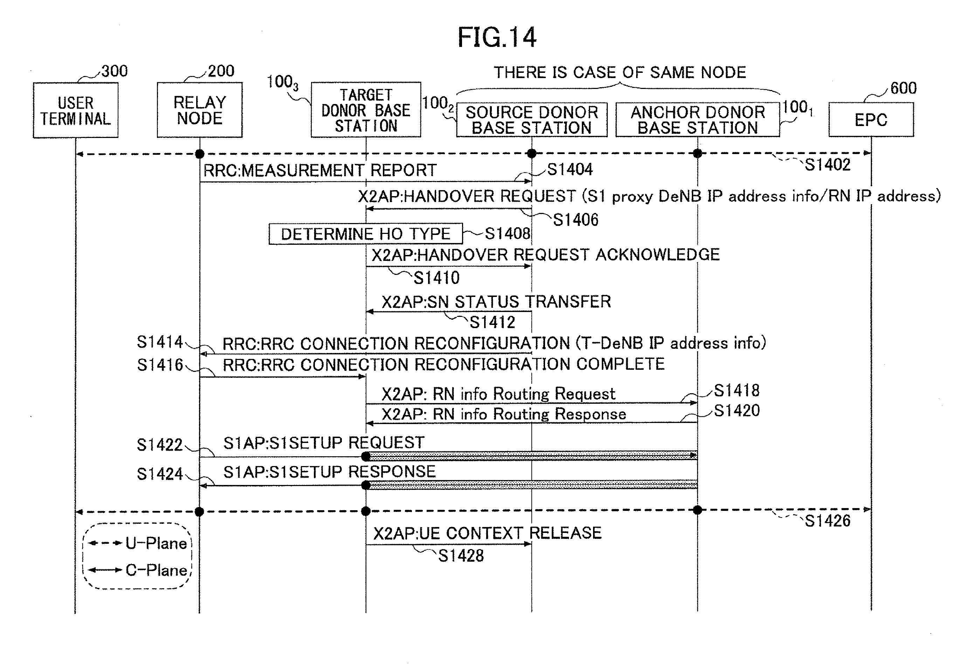

FIG. 14 depicts operations for when the relay node 200 that is under control of the source donor base station 100₂ carries out handover to the target donor base station 100₃. FIG. 14 depicts a case where the anchor donor base station 100₁ has the S1proxy information even after the relay node 200 carries out the handover.

The user terminal 300 that is under control of the relay node 200 carries out communication of U-Plane with the EPC 600 through the source donor base station 100₂ and the anchor donor base station 100₁ (step S1402).

Below, terminations of the S1AP and X2AP protocols are carried out by the call processing control part. However, in a case where the donor base station relays communication between the anchor donor base station and the relay node (using a GTP tunnel for the exclusive use), usage of the call processing control part of the donor base station may be omitted.

The relay node 200 transmits a "measurement report (MEASUREMENT REPORT)" using the RRC protocol to the source donor base station 100₂ (step S1404). The call processing control part 2062 of the relay node 200 transmits the measurement report using the RRC protocol through the transmission processing part 2064, the first baseband processing part 2082 an the RF module 204. The measurement report is then received by the baseband processing part 1082 of the source donor base station 100₂ through the RF module 104.

The source donor base station 100₂ transmits a "handover request (HANDOVER REQUEST)" to the target donor base station 100₃ using the X2AP protocol (step S1406). The handover request includes the IP address of the anchor donor base station 100₁ and the IP address of the relay node 200. The call processing control part 1062 of the source donor base station 100₂ transmits the handover request using the X2AP protocol through the transmission processing part 1064 and the optical module 102. The handover request is then received by the transmission processing part 1064 of the target donor base station 100₃ through the optical module 102.

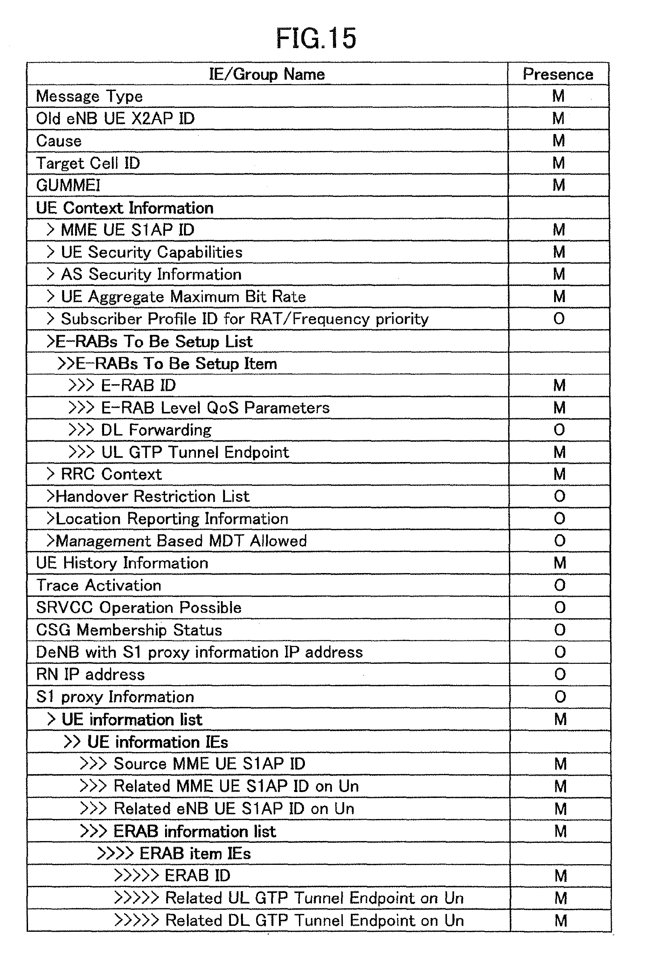

FIG. 15 depicts one embodiment of information included in the handover request. A handover request is described in NON-PATENT REFERENCE NO. 3.

According to the embodiment of the handover request, the IP address of the donor base station that has the S1proxy information (DeNB with S1 proxy information IP address), the IP address of the relay node (RN IP address) and the S1proxy information (S1 proxy Information) are included in a handover request of NON-PATENT REFERENCE NO. 3.

Further, the S1proxy information includes a UE information list (UE information list). The UE information list includes one or more UE information elements (UE information IEs).

The UE information elements include "Source MME UE S1AP ID", "Related MME UE S1AP ID on Un", "Related eNB UE S1AP ID on Un" and "ERAB information list". "Source MME UE S1AP ID" indicates the ID of S1AP between the MME that has the source donor base station under control thereof and the UE. "Related MME UE S1AP ID on Un" indicates the ID of S1AP of Un between an associated MME and the UE. "Related eNB UE S1AP ID on Un" indicates the ID of S1AP of Un between an associated base station and the UE. "ERAB information list" indicates a list of sets of radio bearer information.

"ERAB information list" includes one or more ERAB item information elements (ERAB item IEs).

The ERAB item information elements include "ERAB ID", "Related UL GTP Tunnel Endpoint on Un" and "Related DL GTP Tunnel Endpoint on Un".

The target donor base station 100₃ determines whether to carry out handover with transferring the S1proxy information or handover without transferring the S1proxy information (step S1408). The call processing control part 1062 of the target donor base station 100₃ determines whether to carry out handover with transferring the S1proxy information or handover without transferring the S1proxy information when causing the relay node 200 to carry out the handover. Here, it is determined to carry out handover without transferring the S1proxy information.

The target donor base station 100₃ transmits a "handover request acknowledge (HANDOVER REQUEST ACKNOWLEDGE)" to the source donor base station 100₂ using the X2AP protocol (step S1410). The call processing control part 1062 of the target donor base station 100₃ carries out a process of transmitting the handover request acknowledge using the X2AP protocol through the transmission processing part 1064 and the optical module 102. The handover request acknowledge is then received by the transmission processing part 1064 of the source donor base station 100₂ through the optical module 102.

The source donor base station 100₂ transmits a "SN status transfer (SN STATUS TRANSFER)" to the target donor base station 100₃ using the X2AP protocol (step S1412). The call processing control part 1062 of the source donor base station 100₂ carries out a process of transmitting the SN status transfer using the X2AP protocol through the transmission processing part 1064 and the optical module 102. The SN status transfer is then received by the transmission processing part 1064 of the target donor base station 100₃ through the optical module 102.

The source donor base station 100₂ transmits a "RRC connection reconfiguration (RRC CONNECTION RECONFIGURATION)" to the relay node 200 using the RRC protocol (step S1414). The call processing control part 1062 of the source donor base station 100₂ transmits the RRC connection reconfiguration through the baseband processing part 1082 and the RF module 104.

The relay node 200 transmits a "RRC connection reconfiguration complete (RRC CONNECTION RECONFIGURATION COMPLETE)" to the target donor base station 100₃ using the RRC protocol (step S1416). The call processing control part 2062 of the relay node 200 transmits the RRC connection reconfiguration complete through the transmission processing part 2064, the first baseband processing part 2082 and the RF module 204.

The target donor base station 100₃ transmits a "relay node info routing request (RN info Routing Request)" to the anchor donor base station 100₁ using the X2AP protocol (step S1418). The call processing control part 1062 of the target donor base station 100₃ transmits the relay node info routing request using the X2AP protocol through the transmission processing part 1064 and the optical module 102. That is, the target donor base station 100₃ makes a request for setting a X2AP connection and a GTP tunnel between the target donor base station 100₃ and the anchor donor base station 100₁ for transferring data between the relay node 200 and the anchor donor base station 100₁.

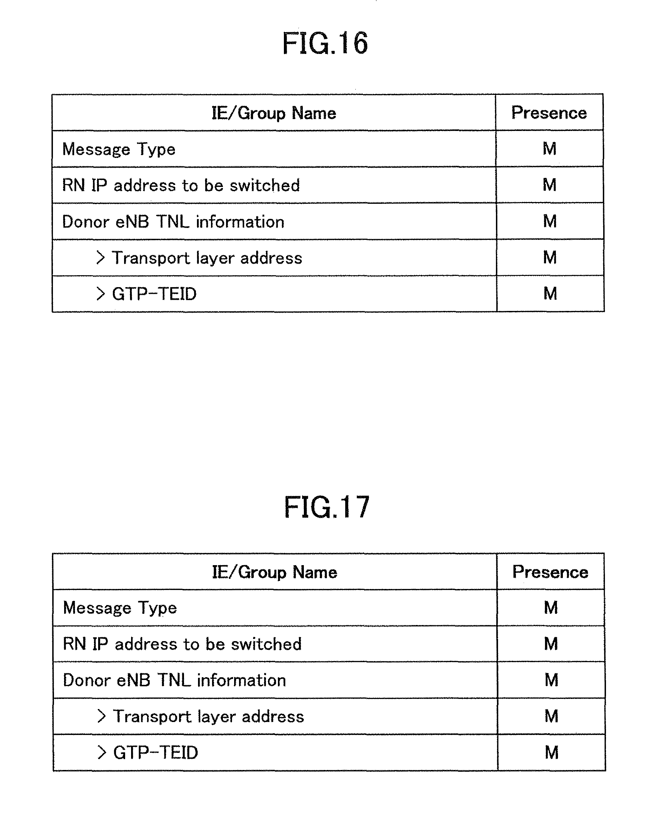

FIG. 16 depicts one embodiment of the relay node info routing request (RN info Routing Request).

The "RN info Routing Request" includes a message type (Message Type), the IP address of the relay node to be switched (RN IP address to be switched) and transport network load information of the donor base station (Donor eNB TNL (Transport Network Load) information).

The transport network load information of the donor base station includes the transport layer address (Transport layer address) and the GTP-TEID.

The anchor donor base station 100₁ transmits a "relay node info routing response (RN info Routing Response)" to the target donor base station 100₃ using the X2AP protocol (step S1420).

FIG. 17 depicts one embodiment of the relay node info routing response (RN info Routing Response).

The "RN info Routing Response" includes a message type (Message Type), the IP address of the relay node to be switched (RN IP address to be switched) and transport network load information of the donor base station (Donor eNB TNL (Transport Network Load) information).

The transport network load information of the donor base station includes the transport layer address (Transport layer address) and the GTP-TEID.

A GTP tunnel is set between the anchor donor base station 100₁ and the target donor base station 100₃. By using the GTP tunnel, the anchor donor base station 100₁ transmits C-Plane and U-Plane to be transmitted to the relay node 200 to the target donor base station 100₃. The target donor base station 100₃ transmits information included in the payload parts of C-Plane and U-Plane from the anchor donor base station 100₁ to the relay node 200. The target donor base station 100₃ transmits the information included in the payload parts to the relay node 200 using the DRB(Un) protocol.

Further, by using the GTP tunnel, the target donor base station 100₃ transmits the C-Plane and the U-Plane from the relay node 200 to the anchor donor base station 100₁. The anchor donor base station 100₁ receives information included in the payload parts of the C-Plane and the U-Plane from the relay node 200. The anchor donor base station 100₁ thus receives the information included in the payload parts of the C-Plane and the U-Plane from the relay node 200 using the DRB(Un) protocol.

The relay node 200 transmits a "S1 setup request (S1SETUP REQUEST)" to the anchor donor base station 100₁ using the S1AP protocol (step S1422). The relay node 200 requests to change the anchor donor base station. The call processing control part 2062 of the relay node 200 carries out a process of transmitting the S1 setup request using the S1AP protocol through the transmission processing part 2064, the first baseband processing part 2082 and the RF module 204.

The anchor donor base station 100₁ transmits a "S1 setup response (S1SETUP RESPONSE)" to the relay node 200 using the S1AP protocol (step S1424). Since transfer of the S1proxy information is not carried out here, the anchor donor base station 100₁ transmits the response to the S1 setup request. The call processing control part 1062 of the anchor donor base station 100₁ carries out a process of transmitting the S1 setup response using the S1AP protocol through the transmission processing part 1064, the baseband processing part 1082 and the RF module 104.

The user terminal 300 that is under control of the relay node 200 carries out communication of U-Plane with the EPC 600 through the relay node 200, the target donor base station 100₃ and the anchor donor base station 100₁ (step S1426).

The target donor base station 100₃ transmits a "UE context release (UE CONTEXT RELEASE)" to the source donor base station 100₂ using the X2AP protocol (step S1428). The call processing control part 1062 of the target donor base station 100₃ transmits the UE context release using the X2AP protocol through the transmission processing part 1064 and the optical module 102.

### <Process of Determining Type of Handover>

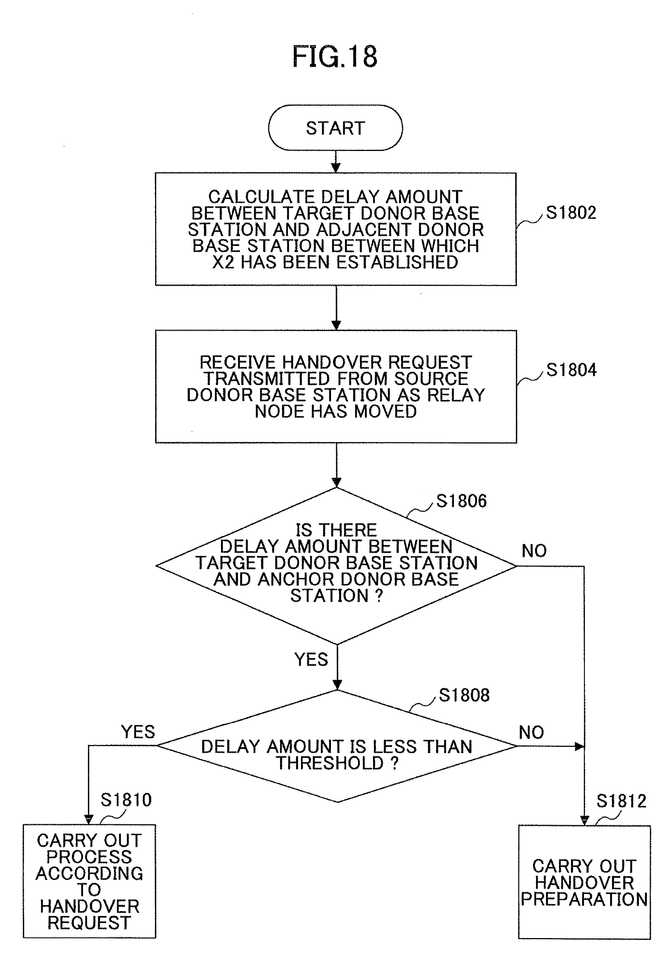

FIG. 18 depicts one embodiment of a process of determining the type of handover carried out by the target donor base station 100₃.

The target donor base station 100₃ measures the delay amount between the target donor base station 100₃ and an adjacent donor base station between which the interface X2 has been established (step S1802). That is, the transmission processing part 1064 measures the delay amount between the target donor base station 100₃ and the adjacent donor base station that is connected through the optical module 102. Specifically, the transmission processing part 1064 measures the delay amount according to the flowchart depicted in FIG. 11.

The target donor base station 100₃ receives a handover request from the source donor base station 100₂ (step S1804) as the relay node 200 has moved. That is, the source donor base station 100₂ transmits the handover request to the target donor base station 100₃ when causing the relay node 200 that is under control of the source donor base station 100₂ to carry out handover. The handover request is input to the transmission processing part 1064 through the optical module 102 of the target donor base station 100₃.

The target donor base station 100₃ determines whether there is information of the delay amount between the target donor base station 100₃ and the anchor donor base station 100₁ (step S1806). That is, the transmission processing part 1064 of the target donor base station 100₃ determines whether the delay amount between the target donor base station 100₃ and the anchor donor base station 100₁ has been measured.

In a case of having determined that the delay amount between the target donor base station 100₃ and the anchor donor base station 100₁ has been measured (step S1806 YES), the target donor base station 100₃ determines whether the delay amount between the target donor base station 100₃ and the anchor donor base station 100₁ is less than the threshold (step S1808). That is, the call processing control part 1062 of the target donor base station 100₃ determines whether the delay amount between the target donor base station 100₃ and the anchor donor base station 100₁ is less than a threshold in a case of having determined that the delay amount between the target donor base station 100₃ and the anchor donor base station 100₁ has been measured.

In a case where the delay amount between the target donor base station 100₃ and the anchor donor base station 100₁ is less than the threshold (step S1808 YES), the target donor base station 100₃ carries out a process according to the handover request (step S1810). That is, the call processing control part 1062 of the target donor base station 100₃ carries out a process according to the handover request in a case of having determined that the delay amount between the target donor base station 100₃ and the anchor donor base station 100₁ is less than the threshold.

In a case of having determined that the delay amount between the target donor base station 100₃ and the anchor donor base station 100₁ has not been measured (step S1806 NO), the target donor base station 100₃ carries out a handover preparation process (step S1812). That is, the call processing control part 1062 of the target donor base station 100₃ carries out a handover preparation process in a case of having determined that the delay amount between the target donor base station 100₃ and the anchor donor base station 100₁ has not been measured.

In a case of having determined that the delay amount between the target donor base station 100₃ and the anchor donor base station 100₁ is greater than or equal to the threshold (step S1808 NO), the target donor base station 100₃ carries out a handover preparation process (step S1812). That is, the call processing control part 1062 of the target donor base station 100₃ carries out a handover preparation process in a case of having determined that the delay amount between the target donor base station 100₃ and the anchor donor base station 100₁ is greater than or equal to the threshold.

### <Handover Process in Case of Transferring S1proxy Information>

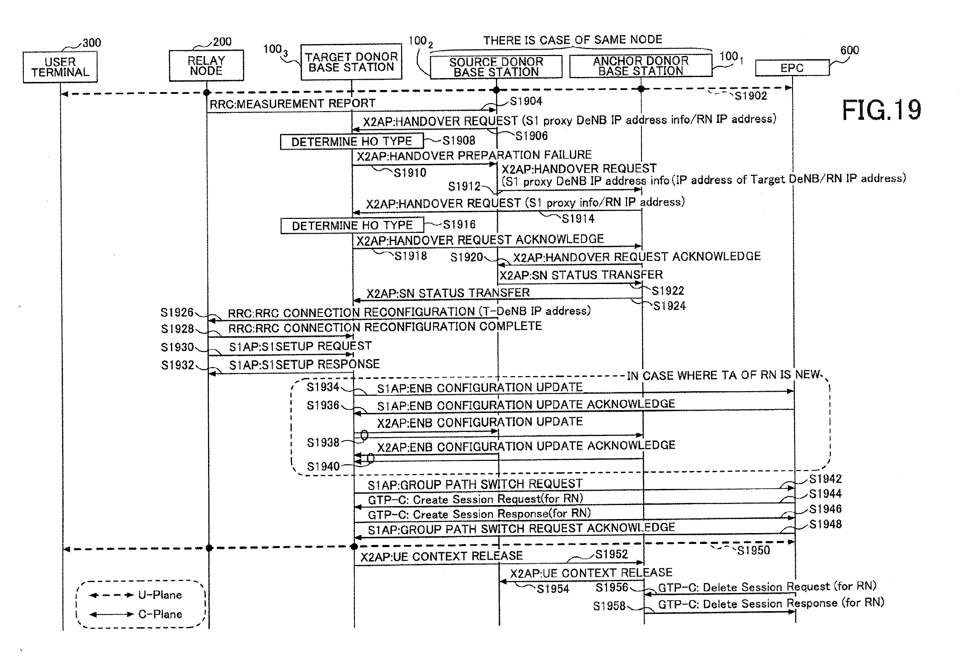

FIG. 19 depicts operations for when the relay node 200 that is under control of the source donor base station 100₂ carries out handover to the target donor base station 100₃. FIG. 19 depicts a case where the S1proxy information is moved from the anchor donor base station 100₁ to the target donor base station 100₃ in a case where the relay node 200 has thus carried out handover.

The user terminal 300 that is under control of the relay node 200 carries out communication of U-Plane with the EPC 600 through the relay node 200, the source donor base station 100₂ and the anchor donor base station 100₁ (step S1902).

The relay node 200 transmits a "measurement report (MEASUREMENT REPORT)" to the source donor base station 100₂ using the RRC protocol (step S1904). The call processing control part 2062 of the relay node 200 carries out a process of transmitting the measurement report using the RRC protocol through the transmission processing part 2064, the first baseband processing part 2082 and the RF module 204.

The source donor base station 100₂ transmits a "handover request (HANDOVER REQUEST)" to the target donor base station 100₃ using the X2AP protocol (step S1906). The handover request includes the IP address of the anchor donor base station 100₁ and the IP address of the relay node 200. The call processing control part 1062 of the source donor base station 100₂ transmits the handover request using the X2AP protocol through the transmission processing part 1064 and the optical module 102.

The target donor base station 100₃ determines whether to carry out handover with transferring the S1proxy information or handover without transferring the S1proxy information (step S1908). The transmission processing part 1064 of the target donor base station 100₃ determines whether to carry out handover with transferring the S1proxy information or handover without transferring the S1proxy information when causing the relay node 200 to carry out handover. Here, it is determined to carry out handover with transferring the S1proxy information.

The target donor base station 100₃ transmits a "handover preparation failure (HANDOVER PREPARATION FAILURE)" to the source donor base station 100₂ using the X2AP protocol (step S1910). The call processing control part 1062 of the target donor base station 100₃ transmits the handover preparation failure through the transmission processing part 1064 and the optical module 102.

The source donor base station 100₂ transmits a "handover request (HANDOVER REQUEST)" to the anchor donor base station 100₁ using the X2AP protocol (step S1912). That is, the call processing control part 1062 of the source donor base station 100₂ transmits the handover request using the X2AP protocol through the transmission processing part 1064 and the optical module 102. The handover request includes the IP address of the anchor donor base station 100₁. Further, the handover request may also include the IP address of the target donor base station 100₃ and the IP address of the relay node 200.

The anchor donor base station 100₁ has the IP address of the relay node 200 managed by the anchor donor base station 100₁ and the IP address of the relay node 200 from the source donor base station 100₂. The anchor donor base station 100₁ can recognize an opportunity to transmit a handover message to transfer the S1proxy information as a result of the IP address of the relay node 200 being thus notified of by the source donor base station 100₂.

The anchor donor base station 100₁ transmits a "handover request (HANDOVER REQUEST)" to the target donor base station 100₃ using the X2AP protocol (step S1914). That is, the call processing control part 1062 of the anchor donor base station 100₁ transmits the handover request using the X2AP protocol through the transmission processing part 1064 and the optical module 102. The handover request includes the S1proxy information and the IP address of the relay node 200.

The target donor base station 100₃ understands that handover with transferring the S1proxy information will be carried out (step S1916). The call processing control part 1062 of the target donor base station 100₃ understands that handover with transferring the S1proxy information will be carried out.

The target donor base station 100₃ transmits a "handover request acknowledge (HANDOVER REQUEST ACKNOWLEDGE)" to the anchor donor base station 100₁ using the X2AP protocol (step S1918). The call processing control part 1062 of the target donor base station 100₃ transmits the handover request acknowledge using the X2AP protocol through the transmission processing part 1064 and the optical module 102.

The anchor donor base station 100₁ transmits a "handover request acknowledge (HANDOVER REQUEST ACKNOWLEDGE)" to the source donor base station 100₂ using the X2AP protocol (step S1920). The call processing control part 1062 of the anchor donor base station 100₁ transmits the handover request acknowledge using the X2AP protocol through the transmission processing part 1064 and the optical module 102.

The source donor base station 100₂ transmits a "SN status transfer (SN STATUS TRANSFER)" to the anchor donor base station 100₁ using the X2AP protocol (step S1922). The call processing control part 1062 of the source donor base station 100₂ transfers the SN status transfer using the X2AP protocol through the transmission processing part 1064 and the optical module 102.

The anchor donor base station 100₁ transmits a "SN status transfer (SN STATUS TRANSFER)" to the target donor base station 100₃ using the X2AP protocol (step S1924). The call processing control part 1062 of the anchor donor base station 100₁ transfers the SN status transfer using the X2AP protocol through the transmission processing part 1064 and the optical module 102.

The source donor base station 100₂ transmits a "RRC connection reconfiguration (RRC CONNECTION RECONFIGURATION)" to the relay node 200 using the RRC protocol (step S1926). The call processing control part 1062 of the source donor base station 100₂ transmits the RRC connection reconfiguration using the RRC protocol through the transmission processing part 1064, the baseband processing part 1082 and the RF module 104. The RRC connection reconfiguration includes the IP address of the target donor base station 100₃.

The relay node 200 transmits a "RRC connection reconfiguration complete (RRC CONNECTION RECONFIGURATION COMPLETE)" to the target donor base station 100₃ using the RRC protocol (step S1928). The call processing control part 2062 of the relay node 200 transmits the RRC connection reconfiguration complete using the RRC protocol through the transmission processing part 2064, the first baseband processing part 2082 and the RF module 204.

The relay node 200 transmits a "S1 setup request (S1 SETUP REQUEST)" to the target donor base station 100₃ using the S1AP protocol (step S1930). The call processing control part 2062 of the relay node 200 transmits the S1 setup request using the S1AP protocol through the transmission processing part 2064, the first baseband processing part 2082 and the RF module 204.

The target donor base station 100₃ transmits a "S1 setup response (S1 SETUP RESPONSE)" to the relay node 200 using the S1AP protocol (step S1932). The call processing control part 1062 of the target donor base station 100₃ transmits the S1 setup response using the S1AP protocol through the transmission processing part 1064, the baseband processing part 1082 and the RF module 104.

A case where the tracking area of the relay node 200 is new will now be described.

The target donor base station 100₃ transmits a "eNB configuration update (ENB CONFIGURATION UPDATE)" to the EPC 600 using the S1AP protocol (step S1934). The call processing control part 1062 of the target donor base station 100₃ transmits the eNB configuration update using the S1AP protocol through the transmission processing part 1064 and the optical module 102.

The EPC 600 transmits a "ENB configuration update acknowledge (eNB CONFIGURATION UPDATE ACKNOWLEDGE)" to the target donor base station 100₃ using the S1AP protocol (step S1936).

The target donor base station 100₃ transmits a "ENB configuration update (eNB CONFIGURATION UPDATE)" to the anchor donor base station 100₁ and the source donor base station 100₂ using the X2AP protocol (step S1938). The call processing control part 1062 of the target donor base station 100₃ transmits the eNB configuration update using the S1AP protocol through the transmission processing part 1064 and the optical module 102.

The anchor donor base station 100₁ and the source donor base station 100₂ transmit "eNB configuration update acknowledges (ENB CONFIGURATION UPDATE ACKNOWLEDGE)" to the target donor base station 100₃ using the X2AP protocol, respectively (step S1940). The call processing control parts 1062 of the anchor donor base station 100₁ and the source donor base station 100₂ transmit the eNB configuration update acknowledges using the S1AP protocol through the transmission processing parts 1064 and the optical modules 102, respectively.

In a case where the tracking area of the relay node 200 is not new, the processes of steps S1934 through S1940 may be omitted.

The target donor base station 100₃ transmits a group path switch request (GROUP PATH SWITCH REQUEST)" to the EPC 600 using the S1AP protocol (step S1942). The call processing control part 1062 of the target donor base station 100₃ transmits the group path switch request using the S1AP protocol through the transmission processing part 1064 and the optical module 102. The target donor base station 100₃ carries out a handover procedure using the S1proxy information. Further, in order to carry out the path switch procedures for the user terminals that are under control of the relay node 200, an interface (IF) in which plural sets of user terminal information can be designated is defined. By using the IF, the target donor base station 100₃ carries out switching into the side of the EPC 600.

Further, also an IF for simultaneously changing plural user terminals may be defined on the side of the EPC 600. By using the IF, the EPC 600 may carry out a MODIFY bearer procedure of GTP-C.

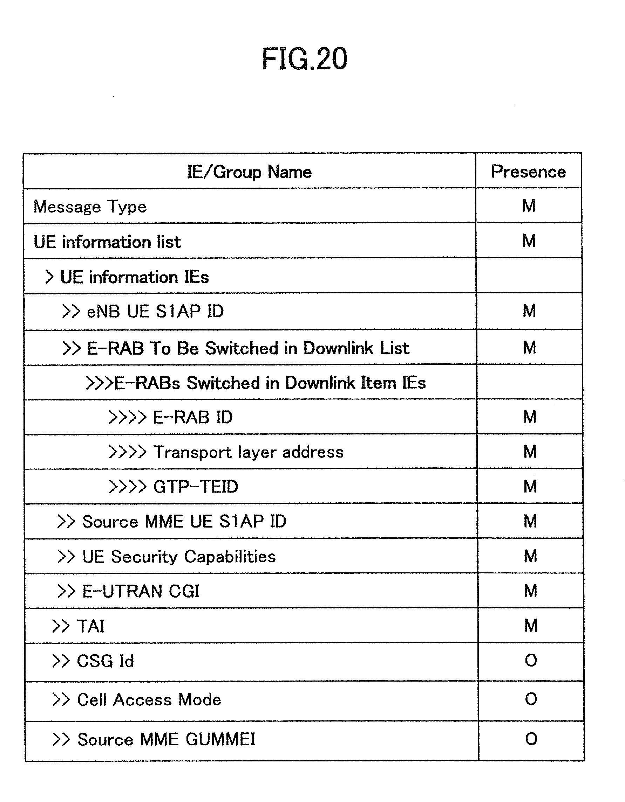

FIG. 20 depicts one embodiment of the group path switch request. In the embodiment of the group path switch request, path switch requests are set for plural user terminals. A path switch request is described in NON-PATENT REFERENCE NO. 5.

The group path switch request is different from a path switch request in that the group path switch request includes a "UE information list" and a "UE information IEs".

The EPC 600 transmits a "create session request (for relay node) (Create Session Request (for RN))" to the target donor base station 100₃ using the GTP-C protocol (step S1944).

The target donor base station 100₃ transmits a "create session response (for relay node) (Create Session Response (for RN))" to the EPC 600 using the GTP-C protocol (step S1946). The call processing control part 1062 of the target donor base station 100₃ transmits the create session response using the GTP-C protocol through the transmission processing part 1064 and the optical module 102.

The EPC 600 transmits a "group path switch request acknowledge (GROUP PATH SWITCH REQUEST ACKNOWLEDGE)" to the target donor base station 100₃ using the S1AP protocol (step S1948).

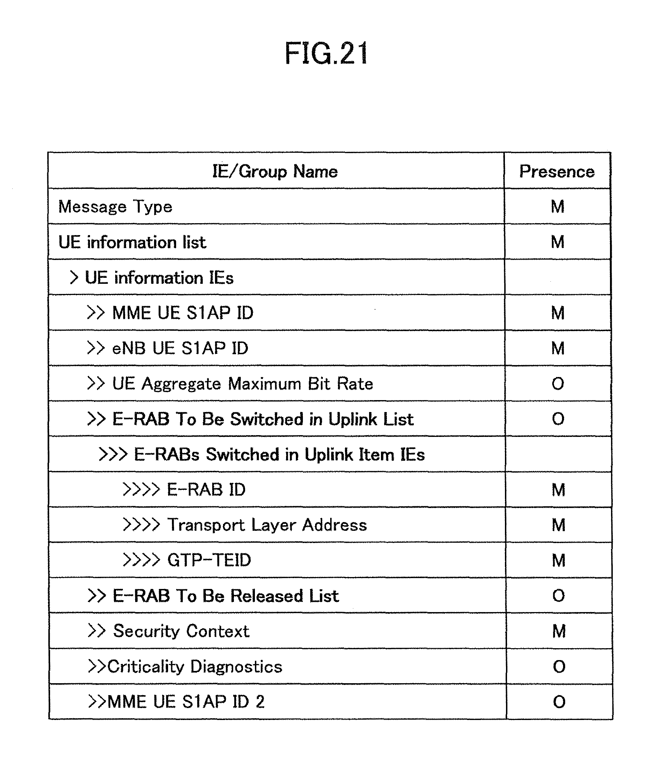

FIG. 21 depicts one embodiment of the group path switch request acknowledge. In the embodiment of the group path switch request acknowledge, path switch request acknowledges are set for plural user terminals. A path switch request acknowledge is described in NON-PATENT REFERENCE NO. 5.

The group path switch request acknowledge is different from a path switch request acknowledge in that the group path switch request acknowledge includes a "UE information list" and a "UE information IEs".

The user terminal 300 that is under control of the relay node 200 carries out communication of U-Plane with the EPC 600 through the relay node 200 and the target donor base station 100₃ (step S1950).

The target donor base station 100₃ transmits a "UE context release (UE CONTEXT RELEASE)" to the anchor donor base station 100₁ using the X2AP protocol (step S1952). The call processing control part 1062 of the target donor base station 100₃ transmits the UE context release using the X2AP protocol through the transmission processing part 1064 and the optical module 102.

The anchor donor base station 100₁ transmits a "UE context release (UE CONTEXT RELEASE)" to the source donor base station 100₂ using the X2AP protocol (step S1954). The call processing control part 1062 of the anchor donor base station 100₁ transmits the UE context release using the X2AP protocol through the transmission processing part 1064 and the optical module 102.

The EPC 600 transmits a "delete session request (for relay node) (Delete Session Request (for RN))" to the anchor donor base station 100₁ using the GTP-C protocol (step S1956).

The anchor donor base station 100₁ transmits a "delete session response (for relay node) (Delete Session Response (for RN))" to the EPC 600 using the GTP-C protocol (step S1958). The call processing control part 1062 of the anchor donor base station 100₁ transmits the delete session response using the GTP-C protocol through the transmission processing part 1064 and the optical module 102.

### <Operations for When Exiting Movable Body>

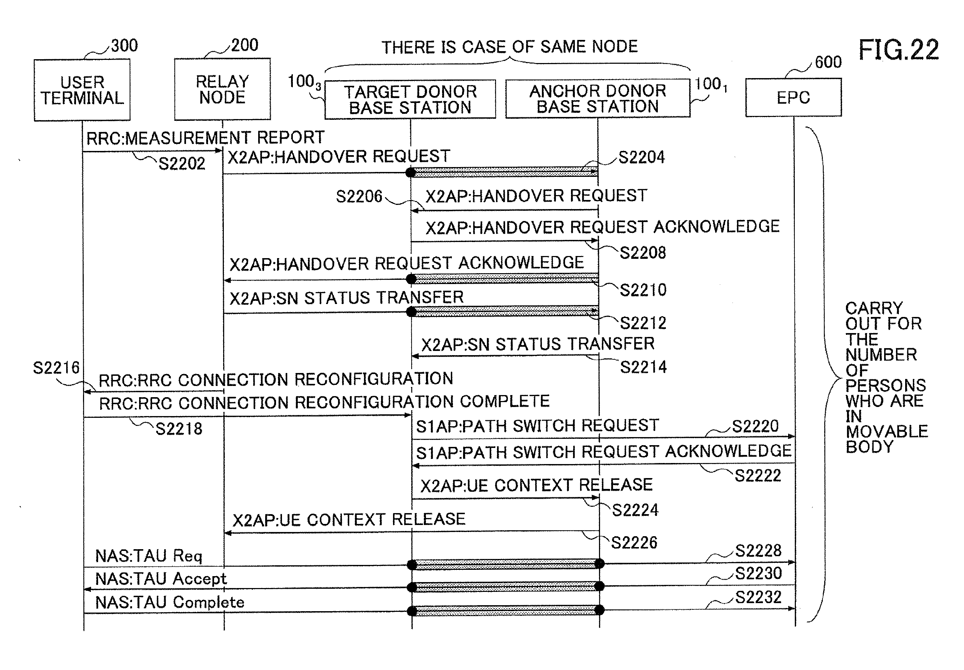

FIG. 22 depicts operations for when the user terminal 300 that is under control of the relay node 200 carries out handover to the target donor base station 100₃. FIG. 22 depicts a case where the anchor donor base station 100₁ has the S1proxy information of the user terminal 300.

The user terminal 300 transmits a "measurement report (MEASUREMENT REPORT)" to the relay node 200 using the RRC protocol (step S2202).

The relay node 200 transmits a "handover request (HANDOVER REQUEST)" to the anchor donor base station 100₁ using the X2AP protocol (step S2204). The call processing control part 2062 of the relay node 200 transmits the handover request using the X2AP protocol through the transmission processing part 2064, the first baseband processing part 2082 and the RF module 204. The relay node 200 knows the cell information that is under control of the target donor base station 100₃ as an adjacent cell. Since an interface X2 is established through a donor base station, the relay node 200 transmits the "handover request" to the anchor donor base station 100₁ using the X2AP protocol.

The anchor donor base station 100₁ transmits a "handover request (HANDOVER REQUEST)" to the target donor base station 100₃ using the X2AP protocol (step S2206). The call processing control part 1062 of the anchor donor base station 100₁ transmits the handover request using the X2AP protocol through the transmission processing part 1064 and the optical module 102.

The target donor base station 100₃ transmits a "handover request acknowledge (HANDOVER REQUEST ACKNOWLEDGE)" to the anchor donor base station 100₁ using the X2AP protocol (step S2208). The call processing control part 1062 of the target donor base station 100₃ transmits the handover request acknowledge using the X2AP protocol through the transmission processing part 1064 and the optical module 102.

The anchor donor base station 100₁ transmits a "handover request acknowledge (HANDOVER REQUEST ACKNOWLEDGE)" to the relay node 200 using the X2AP protocol (step S2210). The call processing control part 1062 of the anchor donor base station 100₁ transmits the handover request acknowledge using the X2AP protocol through the transmission processing part 1064, the baseband processing part 1082 and the RF module 104.

The relay node 200 transmits a "SN status transfer (SN STATUS TRANSFER)" to the anchor donor base station 100₁ using the X2AP protocol (step S2212). The call processing control part 2062 of the relay node 200 transmits the SN status transfer using the X2AP protocol through the transmission processing part 2064, the first baseband processing part 2082 and the RF module 204.

The anchor donor base station 100₁ transmits a "SN status transfer (SN STATUS TRANSFER)" to the target donor base station 100₃ using the X2AP protocol (step S2214). The call processing control part 1062 of the anchor donor base station 100₁ transmits the SN status transfer using the X2AP protocol through the transmission processing part 1064 and the optical module 102.

The relay node 200 transmits a "RRC connection reconfiguration (RRC CONNECTION RECONFIGURATION)" to the user terminal 300 using the RRC protocol (step S2216). The call processing control part 2062 of the relay node 200 transmits the RRC connection reconfiguration using the RRC protocol through the transmission processing part 2064, the second baseband processing part 2084 and the RF module 204.

The user terminal 300 transmits a "RRC connection reconfiguration complete (RRC CONNECTION RECONFIGURATION COMPLETE)" to the target donor base station 100₃ using the RRC protocol (step S2218).

The target donor base station 100₃ transmits a "path switch request (PATH SWITCH REQUEST)" to the EPC 600 using the S1AP protocol (step S2220). The call processing control part 1062 of the target donor base station 100₃ transmits the path switch request using the S1AP protocol through the transmission processing part 1064 and the optical module 102.

The EPC 600 transmits a "path switch request acknowledge (PATH SWITCH REQUEST ACKNOWLEDGE)" to the target donor base station 100₃ using the S1AP protocol (step S2222).

The target donor base station 100₃ transmits a "UE context release (UE CONTEXT RELEASE)" to the anchor donor base station 100₁ using the X2AP protocol (step S2224). The call processing control part 1062 of the target donor base station 100₃ transmits the UE context release using the X2AP protocol through the transmission processing part 1064 and the optical module 102.

The anchor donor base station 100₁ transmits a "UE context release (UE CONTEXT RELEASE)" to the relay node 200 using the X2AP protocol (step S2226). The call processing control part 1062 of the anchor donor base station 100₁ transmits the UE context release using the X2AP protocol through the transmission processing part 1064, the baseband processing part 1082 and the RF module 104.

The user terminal 300 transmits a "tracking area update request (TAU Req)" to the EPC 600 using the NAS protocol (step S2228). The tracking area update request transmitted from the user terminal 300 is transmitted to the EPC 600 through the target donor base station 100₃ and the anchor donor base station 100₁. The anchor donor base station 100₁ carries out a bundling process of the SCTP layer on the uplink messages that are transmitted using the NAS protocol. That is, the anchor donor base station 100₁ makes the header information common concerning layers lower than and equal to the SCTP layer. By thus carrying out bundling of the SCTP layer, it is possible to reduce the processing load of the EPC 600.

The EPC 600 transmits a "tracking area update accept (TAU Accept)" to the user terminal 300 using the NAS protocol (step S2230).

The user terminal transmits a "tracking area update complete (TAU Complete)" to the EPC 600 using the NAS protocol (step S2232). The anchor donor base station 100₁ carries out a bundling process of the SCTP layer on the uplink messages that are transmitted using the NAS protocol. That is, the anchor donor base station 100₁ makes the header information common concerning layers lower than and equal to the SCTP layer. By thus carrying out bundling of the SCTP layer, it is possible to reduce the processing load of the EPC 600.

According to the embodiments, it is possible to measure the delay amount between the base station and the adjacent base station using the GTP-U layer that is the highest layer of U-Plane.

Further, when the relay node will carry out handover between the donor base stations, the S1proxy information is not moved while the handover is carried out in a case where the delay is small between the donor base station that has the S1proxy information and the donor base station that is the handover destination. An interface Uu is terminated between the base station that is the handover destination and the relay node.

Further, when the relay node will carry out handover, the S1proxy information is moved to the donor base station that is the handover destination in a case where the delay is large between the donor base station that has the S1proxy information and the donor base station that is the handover destination. An interface Uu is terminated between the base station that is the handover destination and the relay node. In this case, the procedure to be carried out for the EPC and the procedure(s) associated therewith are carried out almost simultaneously for the user terminals that are under control of the relay node.

When the user terminal carries out handover from the relay node to the donor base station, the donor base station transmits NAS signals that will be transmitted in an uplink manner after carrying out bundling of SCTP, during a predetermined period of time. That is, the header information is made to be common concerning layers lower than and equal to the SCTP layer.

According to the embodiments discussed above, it is possible to reduce an EPC's processing load at a time of a handover process of a relay node and achieve the most suitable load sharing in the entirety of the radio communication system.

## Claims

1. A base station for carrying out communication with a relay station, the base station comprising:
a control part (106) configured to set an interface between the base station and another base station that has information to be used for adjusting a relationship between a protocol set between a host station and the base station and a protocol set between the base station and the relay station; and
a communication module (102) configured to carry out communication between the base station and the host station through the interface set by the control part.

2. The base station according to claim 1, wherein
the control part sets the interface between the base station and the other base station in a case where a period of time from transmitting a predetermined message until receiving a response to the predetermined message is less than a threshold.

3. The base station according to claim 1 or 2, wherein
the control part obtains the information from the other base station in a case where a period of time from transmitting a predetermined message until receiving a response to the predetermined message is greater than or equal to a threshold.

4. The base station according to claim 3, wherein
the control part requests the host station to carry out a path switch procedure of a user terminal that is under control of the relay station.

5. The base station according to any one of claims 1, 2, 3 and 4, wherein
the control part sets a predetermined protocol tunnel between the base station and the other base station.

6. The base station according to claim 1, wherein
the other base station carries out bundling uplink signals from plural user terminals and transmits the uplink signals to the host station.

7. The base station according to claim 1, wherein
the control part sets an X2 application protocol connection between the base station and the other base station.

8. The base station according to claim 2, wherein
the control part measures a period of time from transmitting a predetermined message until receiving a response to the predetermined message based on the information included in a handover request obtained from a base station that is a handover source.

9. The base station according to claim 8, wherein
the control part measures a period of time from transmitting an Echo Request until receiving an Echo Response.

10. The base station according to claim 4, wherein
the control part requests path switch through an interface in which information concerning plural user terminals is set.

11. A relay station for carrying out radio communication with a base station, the relay station comprising:
a control part (206) configured to set a protocol between the relay station and another base station through an interface set between the relay station and the other base station that has information to be used for adjusting a relationship between a protocol set between a host station and the base station and a protocol set between the base station and the relay station.

12. A radio communication system comprising:
a first base station that is the base station according to claim 1; and
a relay station according to claim 11.

13. The radio communication system according to claim 12, wherein
the first base station becomes a handover destination of the relay station.

14. The radio communication system according to claim 12 or 13, wherein
the control part of the relay station carries out connection reconfiguration between the relay station and a base station that becomes a handover destination according to information that indicates the base station that becomes a handover destination included in the connection reconfiguration notified by the other base station.

15. A communication method of a radio communication system that has a first base station and a relay station configured to carry out radio communication with the first base station, the communication method comprising:
setting, by the first base station, an interface between the first base station and a second base station that has information to be used for adjusting a relationship between a protocol set between a host station and the first base station and a protocol set between the first base station and a relay station, and carrying out communication, by the first base station, with the host station using the interface; and
setting, by the relay station, a protocol between the relay station and the second base station through an interface set between the relay station and the second base station.
